(19) Europäisches Patentamt
European Patent Office
Office européen des brevets

(11) **EP 4 029 633 A1**

(12) **EUROPEAN PATENT APPLICATION**

(43) Date of publication:
**20.07.2022 Bulletin 2022/29**

(21) Application number: **22152114.9**

(22) Date of filing: **18.01.2022**

(51) International Patent Classification (IPC):
**B22F 10/31** (2021.01) **B22F 10/85** (2021.01)
**B29C 64/393** (2017.01) **B33Y 50/02** (2015.01)
**G01B 11/06** (2006.01) **G01B 21/04** (2006.01)

(52) Cooperative Patent Classification (CPC):
**B22F 10/31; B22F 10/85; B29C 64/393;
B33Y 50/02; G01B 11/0608; G01B 21/042**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.01.2021 US 202163138987 P**

(71) Applicant: **Markforged, Inc.
Watertown, MA 02472 (US)**

(72) Inventor: **JONES, Bruce David
Watertown, MA 02472 (US)**

(74) Representative: **Kilner, Matthew Simon et al
Kilburn & Strode LLP
Lacon London
84 Theobalds Road
London WC1X 8NL (GB)**

(54) **Z-SCALE AND MISALIGNMENT CALIBRATION FOR 3D PRINTING**

(57) A 3D printing apparatus includes a distance measurement portion that detects the height of a build platen having its height controlled by a displacement control portion. The apparatus detects a Z-scale error by displacing the build platen between at least two different set heights, detecting the heights of the build platen at each set height, and calculating the Z-scale error.

**FIG. 1A**

## Description

FIELD OF THE INVENTION

The invention relates to an apparatus and method for detecting Z-scale error and/or component misalignment. The invention also relates to an apparatus and method for correcting Z-scale error and/or component misalignment.

BACKGROUND OF THE INVENTION

In systems (such as 3D printers) involving controlled displacement of system components, the performance of such systems may depend on the accuracy of the controlled displacement. For instance, in the case of a 3D printing system, the accuracy of a 3D-printed part may depend on accurate control of system component displacement along the X, Y, and Z directions.

In such systems, controlled displacement may be implemented using a lead screw having a predefined screw pitch and coupled to the system portion to be driven. The system may control displacement by rotating the lead screw for a particular number of rotations. As one example, a 3D printing system may include a lead screw to control movement of a build platen in the Z direction. However, the actual screw pitch of the lead screw may deviate from specification, causing an error in scale of the displacement controlled by the lead screw. Other motion control components besides a lead screw may also cause scaling errors due to deviations between design and actual characteristics.

Therefore, a need in the art exists to detect and compensate for these scaling errors in displacement systems.

The inventor of the present application discovered that one solution to provide such detection and compensation of scaling errors is by taking distance measurements with a laser scanner, as set forth in the present invention. However, the inventor of the present application also discovered that angular misalignment of the laser scanner could produce misalignment errors which could affect the accuracy in detecting the displacement scaling error.

Therefore, a need in the art also exists to detect misalignment errors in distance measurement systems.

SUMMARY OF THE INVENTION

One aspect of the present invention relates to a system and method of detecting a scaling error in displacement systems.

Another aspect of the present invention relates to a system and method of detecting misalignment in distance measurement systems.

Yet another aspect of the present invention relates to an apparatus comprising at least one processor; and at least one memory, wherein the at least one memory stores computer-readable instructions which, when executed by the at least one processor, cause the processor to: control a height adjustment mechanism to adjust a height of a surface of the apparatus, to a first control height; control a height measurement mechanism to perform a first height measurement when the height adjustment mechanism is controlled to be at the first control height; control the height adjustment mechanism to adjust the height of the surface, to one or more additional control heights; control the height measurement mechanism to perform one or more additional height measurements when the height adjustment mechanism is controlled to be at respective heights of the one or more additional first control heights; and calculate a scaling error of the height adjustment mechanism based on the first height measurement, the one or more additional height measurements, the first control height, and the one or more additional control heights.

Still another aspect of the present invention relates to a method comprising controlling a height adjustment mechanism to adjust a height of a surface of the apparatus, to a first control height; controlling a height measurement mechanism to perform a first height measurement when the height adjustment mechanism is controlled to be at the first control height; controlling the height adjustment mechanism to adjust the height of the surface, to one or more additional control heights; controlling the height measurement mechanism to perform one or more additional height measurements when the height adjustment mechanism is controlled to be at respective heights of the one or more additional first control heights; and calculating a scaling error of the height adjustment mechanism based on the first height measurement, the one or more additional height measurements, the first control height, and the one or more additional control heights.

An additional aspect of the present invention relates to an apparatus comprising at least one processor; and at least one memory, wherein the at least one memory stores computer-readable instructions which, when executed by the at least one processor, cause the processor to: control a height adjustment mechanism to adjust a height of a surface of the apparatus, to a first control height; control a measurement mechanism to measure first positions of a plurality of features positioned at different locations on the surface; control the height adjustment mechanism to adjust the height of the surface, to a second control height; control the measurement mechanism to measure second positions of the plurality of features; and calculate an alignment error based on (i) differences between the first positions and the second positions and (ii) a difference between the first control height and the second control height.

Yet still another aspect of the present invention relates to a method comprising controlling a height adjustment mechanism to adjust a height of a surface of the apparatus, to a first control height; controlling a measurement mechanism to measure first positions of a plurality of features positioned at different locations on the surface; controlling the height adjustment mechanism to adjust the height of the surface, to a second control height; controlling the measurement mechanism to measure second positions of the plurality of features; and calculating an alignment error based on (i) differences between the first positions and the second positions and (ii) a difference between the first control height and the second control height.

These and other aspects of the invention will become apparent from the following disclosure.

BRIEF DESCRIPTION OF THE DRAWINGS

Figs. 1A and 1B illustrate an apparatus, in accordance with one embodiment.

Fig. 2 is a block diagram illustrating components of the apparatus, in accordance with one embodiment.

Fig. 3 illustrates an example of Z-scale error, prior to Z-scale calibration detection and correction.

Fig. 4 is a flow chart for performing Z-scale calibration detection, in accordance with one embodiment.

Fig. 5 is a flow chart for performing Z-scale calibration detection, in accordance with one embodiment.

Fig. 6 illustrates an example of the system utilizing a gauge block, in accordance with one embodiment.

Fig. 7A is a flow chart for performing Z-scale calibration detection utilizing a gauge block, according to one embodiment, and Fig. 7B is a flow chart for performing Z-scale calibration detection utilizing multiple gauge blocks, according to one embodiment.

Fig. 8 is a flow chart for performing Z-scale calibration detection utilizing one or more gauge blocks, according to one embodiment.

Fig. 9 illustrates a reference bed, in accordance with one embodiment.

Fig. 10 is a sectional view of a reference bed groove in accordance with one embodiment.

Fig. 11 is a flow chart for performing Z-scale calibration detection utilizing a reference bed, according to one embodiment.

Fig. 12 is a flow chart for performing Z-scale calibration detection utilizing a reference bed, according to one embodiment.

Fig. 13 is a flow chart for performing Z-scale calibration detection utilizing a reference bed and an integrated gauge block, according to one embodiment.

Fig. 14 is a flow chart for compensating for Z-scale errors, in accordance with one embodiment.

Fig. 15 illustrates an example of laser scanner misalignment and the errors resulting from such misalignment.

Fig. 16 is a flow chart for detecting the centers of the intersections of the grooves of the reference bed, in accordance with one embodiment.

Fig. 17 is a flow chart for detecting the centers of the intersections of the grooves of the reference bed, in accordance with one embodiment.

Fig. 18 is a sectional view of a reference bed groove and sample points, in accordance with one embodiment.

Fig. 19 is a flow chart for detecting misalignment of a laser scanner, in accordance with one embodiment.

Fig. 20 is a flow chart for compensating for laser scanner misalignment, in accordance with one embodiment.

DETAILED DESCRIPTION OF THE PREFERRED EMBODIMENTS

One aspect of the invention is an apparatus and method for detecting Z-scale error and/or component misalignment. Another aspect of the invention is an apparatus and method for performing such detection(s) in a 3D printer. Yet another aspect of the invention is an apparatus and method for correcting Z-scale error and/or component misalignment. Still yet another aspect of the invention is an apparatus and method for performing such correction(s) in a 3D printer.

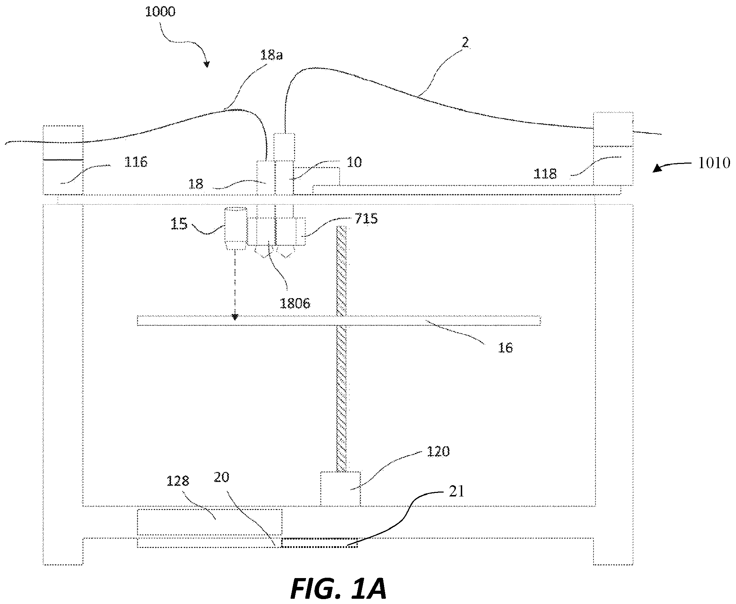

Figs. 1A-1B illustrate an apparatus 1000 in accordance with one embodiment of the invention. The apparatus 1000 includes a controller 20 and one or more print heads 10, 18. For instance, one head 10 may deposit a metal or fiber reinforced composite filament 2, and another head 18 may apply pure or neat matrix resin 18a (thermoplastic or curing). In the case of the filament 2 being a fiber reinforced composite filament, such filament (also referred to herein as continuous core reinforced filament) may be substantially void free and include a polymer or resin that coats, permeates or impregnates an internal continuous single core or multistrand core. It should be noted that although the print head 18 is shown as an extrusion print head, "fill material print head" 18 as used herein includes optical or UV curing, heat fusion or sintering, or "polyjet", liquid, colloid, suspension or powder jetting devices (not shown) for depositing fill material. It will also be appreciated that a material bead formed by the filament 10a may be deposited as extruded thermoplastic or metal, deposited as continuous or semi-continuous fiber, solidified as photo or UV cured resin, or jetted as metal or binders mixed with plastics or metal, or are structural, functional or coatings. The fiber reinforced composite filament 2 (also referred to herein as continuous core reinforced filament) may be a push-pulpreg that is substantially void free and includes a polymer or resin 4 that coats or impregnates an internal continuous single core or multistrand core 6. The apparatus includes heaters 715, 1806 to heat the print heads 10, 18, respectively so as to facilitate deposition of layers of material to form the object 14 to be printed. A cutter 8 controlled by the controller 20 may cut the filament 2 during the deposition process in order to (i) form separate features and components on the structure as well as (ii) control the directionality or anisotropy of the deposited material and/or bonded ranks in multiple sections and layers. As depicted, the cutter 8 is a cutting blade associated with a backing plate 12 located at the nozzlet outlet. Other cutters include laser, high-pressure air or fluid, or shears. The apparatus 1000 may also include additional non-printing tool heads, such as for milling, SLS, etc.

The apparatus 1000 includes a gantry 1010 that supports the print heads 10, 18. The gantry 1010 includes motors 116, 118 to move the print heads 10, 18 along X and Y rails in the X and Y directions, respectively. The apparatus 1000 also includes a build platen 16 (e.g., print bed) on which an object to be printed is formed. The height of the build platen 16 is controlled by a motor 120 for Z direction adjustment. Although the movement of the apparatus has been described based on a Cartesian arrangement for relatively moving the print heads in three orthogonal translation directions, other arrangements are considered within the scope of, and expressly described by, a drive system or drive or motorized drive that may relatively move a print head and a build plate supporting a 3D printed object in at least three degrees of freedom (i.e., in four or more degrees of freedom as well). For example, for three degrees of freedom, a delta, parallel robot structure may use three parallelogram arms connected to universal joints at the base, optionally to maintain an orientation of the print head (e.g., three motorized degrees of freedom among the print head and build plate) or to change the orientation of the print head (e.g., four or higher degrees of freedom among the print head and build plate). As another example, the print head may be mounted on a robotic arm having three, four, five, six, or higher degrees of freedom; and/or the build platform may rotate, translate in three dimensions, or be spun.

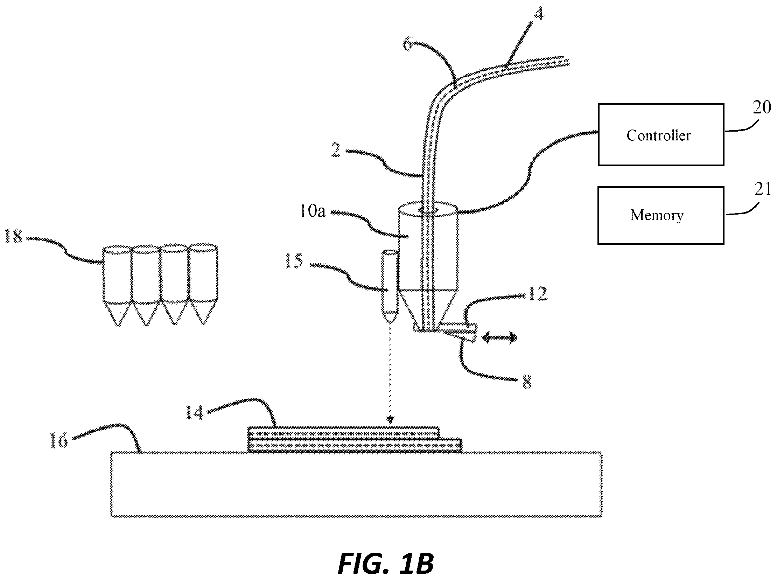

Fig. 1B depicts an embodiment of the apparatus 1000 applying the filament 2 to build a structure. In one embodiment, the filament 2 is a metal filament for printing a metal object. In one embodiment, the filament 2 is a fiber reinforced composite filament (also referred to herein as continuous core reinforced filament) may be a push-pulpreg that is substantially void free and includes a polymer or resin 4 that coats or impregnates an internal continuous single core or multistrand core 6.

The filament 2 is fed through a nozzlet 10a disposed at the end of the print head 10, and heated to extrude the filament material for printing. In the case that the filament 2 is a fiber reinforced composite filament, the filament 2 is heated to a controlled push-pultrusion temperature selected for the matrix material to maintain a predetermined viscosity, and/or a predetermined amount force of adhesion of bonded ranks, and/or a surface finish. The push-pultrusion may be greater than the melting temperature of the polymer 4, less than a decomposition temperature of the polymer 4 and less than either the melting or decomposition temperature of the core 6.

After being heated in the nozzlet 10a and having its material substantially melted, the filament 2 is applied onto the build platen 16 to build successive layers 14 to form a three dimensional structure. One or both of (i) the position and orientation of the build platen 16 or (ii) the position and orientation of the nozzlet 10 are controlled by a controller 20 to deposit the filament 2 in the desired location and direction. Position and orientation control mechanisms include gantry systems, robotic arms, and/or H frames, any of these equipped with position and/or displacement sensors to the controller 20 to monitor the relative position or velocity of nozzlet 10a relative to the build platen 16 and/or the layers 14 of the object being constructed. The controller 20 may use sensed X, Y, and/or Z positions and/or displacement or velocity vectors to control subsequent movements of the nozzlet 10a or platen 16. The apparatus 1000 may include a laser scanner 15 to measure distance to the platen 16 or the layer 14, displacement transducers in any of three translation and/or three rotation axes, distance integrators, and/or accelerometers detecting a position or movement of the nozzlet 10a to the build platen 16. The laser scanner 15 may scan the section ahead of the nozzlet 10a in order to correct the Z height of the nozzlet 10a, or the fill volume required, to match a desired deposition profile. This measurement may also be used to fill in voids detected in the object. The laser scanner 15 may also measure the object after the filament is applied to confirm the depth and position of the deposited bonded ranks. Distance from a lip of the deposition head to the previous layer or build platen, or the height of a bonded rank may be confirmed using an appropriate sensor.

Various 3D-printing aspects of the apparatus 1000 are described in detail in U.S. Patent Application Publication No. 2019/0009472, which is incorporated by reference herein in its entirety.

*Laser Scanner*

Various aspects of the laser scanner 15 will now be discussed. The laser scanner 15 may scan the section ahead of the next deposition in order to correct the Z height of the nozzlet 10a, or the fill volume required, to match a desired deposition profile. This measurement may also be used to fill in voids detected in the part. The laser scanner 15 may measure the object after the filament is applied to confirm the depth and position of the deposited bonded ranks. Distance from a lip of the deposition head to the previous layer or build platen, or the height of a bonded rank may be confirmed using an appropriate sensor, including the laser scanner 15.

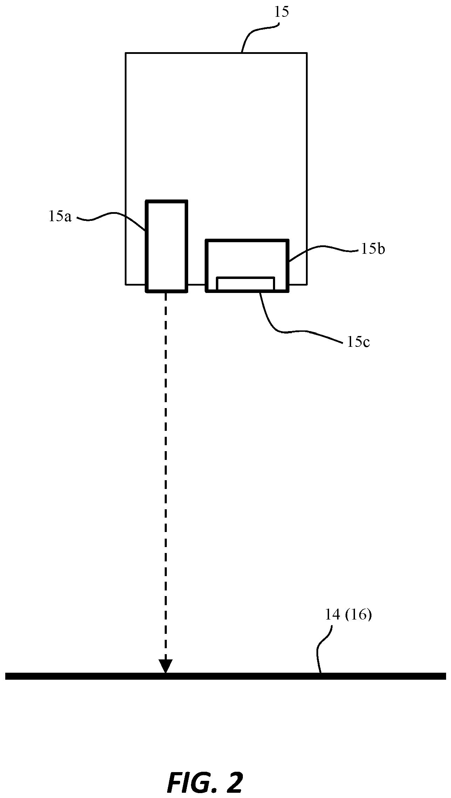

The laser scanner 15 may be formed as a short-range laser scanner, a high resolution RGBD camera, a triangulating, time of flight, phase difference, or interferometric scanner, a structured light camera or sensor, or the like. As illustrated in Fig. 2, the laser scanner 15 includes a laser emitter 15a and a laser receiver 15b.

In one embodiment, the laser scanner 15 is mounted on (e.g., integral with) the print head 10. In another embodiment, the laser scanner 15 is mounted on an independent head coupled to the print head 10. In yet another embodiment, the laser scanner 15 is fixed to the apparatus 1000 (e.g., mounted to a chassis), and the object to be measured is moved relative to the laser scanner 15.

The laser emitter 15a emits a laser beam of a predetermined sized profile on the surface of the object to be scanned. In one embodiment, the laser emitter 15a is arranged such that the emitted laser beam is oriented generally downward at a predetermined angle relative to a vertical direction of the apparatus. In one embodiment, the predetermined angle is oblique. In one embodiment, the predetermined angle is in a range between 0 and 89 degrees relative to the vertical direction, preferably between 0 and 45 degrees, and even more preferably between 0 and 20 degrees.

In one embodiment, the predetermined angle of the emitted laser beam is zero, such that the laser beam is coincident with the vertical direction and oriented directly downward. In one embodiment, the laser beam is a circular (e.g., dot) profile. In one embodiment, the diameter of the laser dot is between 0.1 and 100 $\mu$m, preferably between 20 and 80 $\mu$m, and even more preferably between 40 and 60 $\mu$m. In one embodiment, the laser beam has a profile other than a circular profile, such as a line profile or a chevron profile.

The laser receiver 15b senses the laser beam emitted from the laser emitter 15a, incident and visible on a surface of the 3D-printed object. In one embodiment, the laser receiver includes an optical sensor 15c and an optical system (not shown). In one embodiment, the optical sensor 15c is a two-dimensional sensor, including but not limited to a CCD or CMOS sensor. In another embodiment, the optical sensor 15c is a line sensor. In one embodiment, the laser scanner 15 includes a vision system to analyze optical signals received from the optical sensor 15c.

The optical sensor 15c is arranged so as to face generally downward, at a predetermined angle relative to the vertical direction of the apparatus. In one embodiment, the predetermined angle is oblique. In one embodiment, the predetermined angle is in a range between 0 and 89 degrees relative to the vertical direction, preferably between 0 and 45 degrees, and even more preferably between 0 and 20 degrees. In one embodiment, the predetermined angle is zero, such that the optical detector is facing directly downward in the vertical direction.

In one embodiment, the laser beam emitted from the laser emitter 15a is aimed directly downwards, and the optical sensor 15c is likewise aimed directly downwards. In one embodiment, the laser beam emitted from the laser emitter 15a is aimed directly downwards, while the optical sensor 15c is oriented at an angle relative to the vertical direction, preferably in a range between 0 and 45 degrees relative to the vertical direction, even more preferably between 0 and 20 degrees, and even further more preferably between 0 and 5 degrees. In one embodiment, the laser emitter 15a and the laser receiver 15b are arranged to be as close to each other as possible.

The apparatus may rely on principles of triangulation to determine the distance (e.g., depth) between the laser scanner 15 and the surface of the object on which the laser beam is incident. In particular, the distance will affect the position of the laser beam as observed from the laser receiver's perspective. The distance may be determined based on where the laser beam is observed within the laser receiver's perspective.

It will be appreciated that laser scanning involves a line of sight between the laser emitter 15a and the sample point being scanned (so that the laser beam is incident on the sample point) and a line of sight between the optical sensor 15c and the sample point (so that the visualized laser beam incidence on the object is visible to the optical sensor).

In a circumstance that no object is being printed, the laser scanner 15 may be configured to measure the distance to the build platen 16. In a circumstance that an object (e.g., a gauge block, as described below) is placed on the build platen 16 or the build platen is replaced with a reference bed (as also described below), the laser scanner 15 may be configured to measure the distance to such object or reference bed.

Such distance measurements collected by the laser scanner 15 may also be used to determine the height of the build platen 16 along its Z range of motion, according to predefined inter-positioning of components within the apparatus. Furthermore, when an object placed on the build platen 16, the combined height of the build platen 16 and the object placed hereon may be determined from a distance measurement collected by the laser scanner 15.

*Z-Scale Calibration Detection*

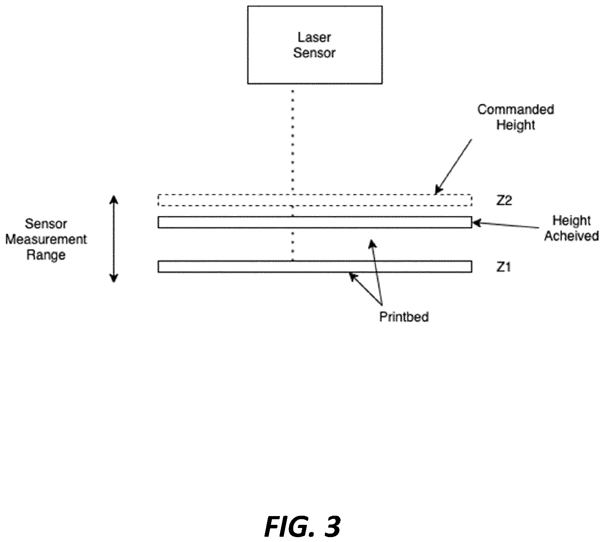

Fig. 3 illustrates an example of the system experiencing Z-scale error. For example, even when the height of the build platen 16 (also known as a print bed) is calibrated at one height (e.g., Z1), the Z-scale error causes a difference between a set height that is commanded by the system (e.g., Z2) and the actual reached height, when the build platen 16 is raised or lowered to a different height from Z1.

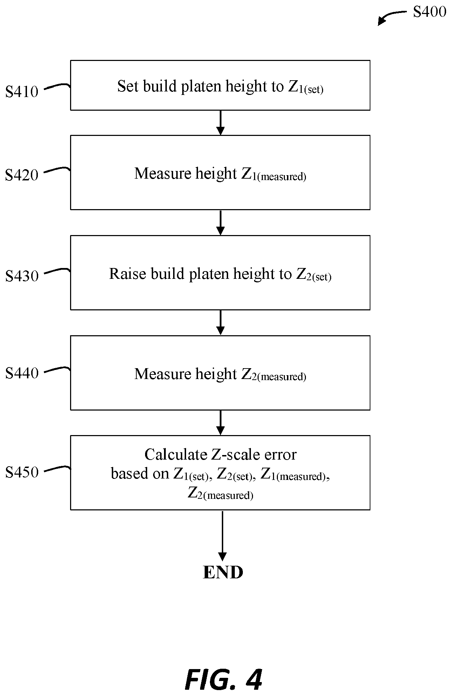

Fig. 4 illustrates an operation S400 for performing Z-scale calibration detection in the system, according to one embodiment. First, in step S410, the controller 20 controls the Z motor 120 to set the height of the build platen 16 to a first height $Z_{1(set)}$. In one embodiment, the height $Z_{1(set)}$ is at or near the lowest height within the height measurement range of the laser scanner 15.

In step S420, the controller 20 controls the laser scanner 15 to measure the height of the build platen 16 in the Z direction, and stores the measured height value $Z_{1(measured)}$ in the memory 21.

In step S430, the controller 20 controls the Z motor 120 to raise the height of the build platen 16 to a second height $Z_{2(set)}$. In one embodiment, the height $Z_{2(set)}$ is at or near the highest height within the height measurement range of the laser scanner 15.

In step S440, the controller 20 controls the laser scanner 15 to measure the height of the build platen 16 in the Z direction, and stores the measured height value $Z_{2(measured)}$ in the memory 21.

In step S450, the controller 20 calculates the Z-scale error based on $Z_{1(set)}$, $Z_{2(set)}$, $Z_{1(measured)}$, and Z2(measured), and stores the error value in the memory 21.

In an ideal case devoid of Z-scale error, the difference between the measured distances will equal the difference between the set distances, i.e., $Z_{2(measured)} - Z_{1(measured)} = Z_{2(set)} - Z_{1(set)}$. However, if a Z-scale error exists, these two differences will differ from each other. The Z-scale error may be calculated as:

$$Error = \frac{Z_{2(measured)} - Z_{1(measured)}}{Z_{2(set)} - Z_{1(set)}}$$

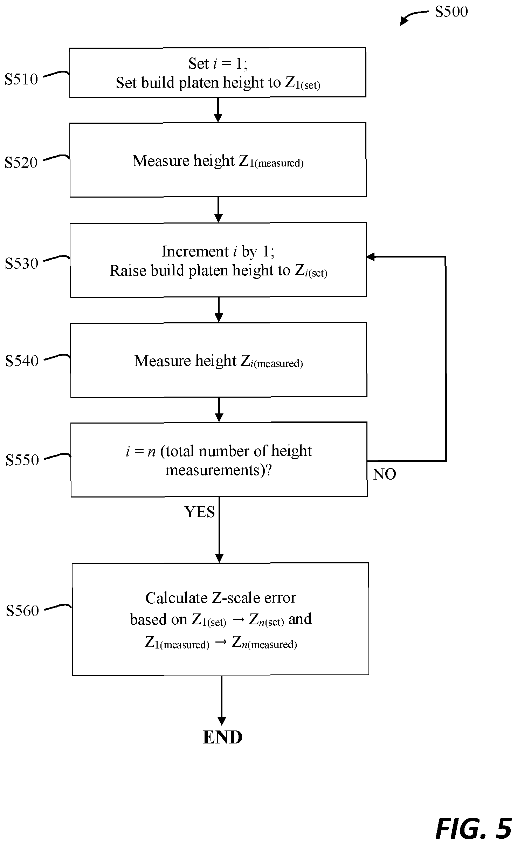

Fig. 5 illustrates another operation S500 for performing Z-scale calibration detection in the system, according to one embodiment. The operation of Fig. 5 differs from that of Fig. 4 by-instead of utilizing two heights and respective measurements to determine the Z-scale error-moving the build platen 16 to 'n' number of heights $Z_{1(set)} \rightarrow Z_{n(set)}$ and taking corresponding height measurements $Z_{1(measured)} \rightarrow Z_{n(measured)}$ to determine the Z-scale error. In describing this operation:

'n' represents the total number of height measurements to be collected,
'i' represents the i-th height during the operation (where i increments by one for each successive height),
$Z_{i(set)}$ represents the set height for the i-th height, and $Z_{i(measured)}$ represents the measured height for the i-th height.

First, in step S510, the controller 20 sets i to 1, and controls the Z motor 120 to set the height of the build platen 16 to a first height $Z_{1(set)}$ (e.g., $Z_{i(set)}$ where i = 1). In one embodiment, the height $Z_{1(set)}$ is at or near the lowest height of the height measurement range of the laser scanner 15.

In step S520, the controller 20 controls the laser scanner 15 to measure the height of the build platen 16 in the Z direction, and stores the measured height value $Z_{1(measured)}$ in the memory 21.

In step S530, the controller 20 increments i by one, and controls the Z motor 120 to raise the height of the build platen 16 to the next (i.e., i-th) height $Z_{i(set)}$ (e.g., $Z_{2(set)}$ for a second height, where i = 2).

In step S540, the controller 20 controls the laser scanner 15 to measure the height of the build platen 16 in the Z direction, and stores the measured height value $Z_{i(measured)}$ in the memory 21.

In step S550, the controller 20 determines whether the current number i of height measurements has reached the total number n of height measurements to be collected, i.e., whether i = n. If the current number i has not yet reached the total number n, the operation returns to step S530 to move the build platen 16 to the next height and collect the next height measurement. If the current number i has reached the total number n, the operation proceeds to step S560.

In step S560, the controller 20 calculates one or more Z-scale error values based on $Z_{1(set)}$ through Zn(set) and $Z_{1(measured)}$ through $Z_{n(measured)}$, and stores the error value(s) in the memory 21. Such calculation(s) may be accomplished through various known approaches. For example, the controller 20 may utilize a linear regression model (e.g., linear least squares) to define the Z-scale error. In another example, the controller 20 may employ a higher-order regression model to define the Z-scale error.

In one embodiment, the operation 500 sets each successive height based on a constant increment (e.g., $\Delta Z_{set}$) from the previous height. For example, $\Delta Z_{set}$ may be a value that divides the height measurement range of the laser scanner 15 (or a substantial portion thereof) into n height measurements that are equally spaced apart.

In one embodiment, the operation 500 sets each successive height based on variable increments. For example, the operation 500 may divide the height measurement range of the laser scanner 15 (or a substantial portion thereof) into n height measurements with more densely distributed heights in one or more portions of the range. For instance, the height measurements may be more densely distributed near one or both ends of the measurement range, or may be more densely distributed near the center of the measurement range.

The present invention further includes variants that may be combined with the operations described herein (including at least those of Figs. 4 and 5) without deviating from the spirit of the invention. For instance, the calibration detection operation may incorporate multiple sets of height measurements taken at different X-Y positions on the build platen 16. By taking height measurements at multiple X-Y positions, the system may account for measurement errors induced by any imperfections on the surface of the build platen 16. In one embodiment, the X-Y positions are arranged in a grid pattern. In one embodiment, the X-Y positions are arranged at random. In one embodiment, the X-Y positions are based on continuous movement of the laser scanner 15 (e.g., including any print head on which the laser scanner 15 may be mounted) in the X and/or Y directions.

*Z-Scale Calibration Detection with Gauge Block*

Another aspect of the present invention includes utilizing one or more gauge blocks to perform Z-scale calibration detection. A gauge block is a component manufactured with sufficient accuracy to serve as a measurement tool based on its predefined dimensions. As employed for use with the present invention, a gauge block is manufactured at least to a predefined height $Z_{block}$ with sufficient accuracy. In one aspect of the present invention, the gauge block may be a rectangular and/or box-shaped with adjacent surfaces oriented at right angles. In one aspect of the present invention, the gauge block is constructed of ceramic material.

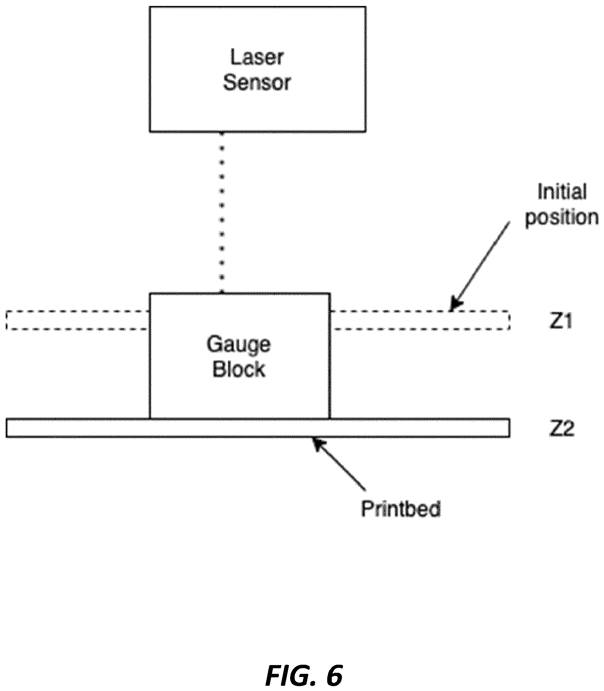

Fig. 6 illustrates an example of the system utilizing a gauge block. The gauge block is placed on the build platen 16, and provides a known height difference relative to its absence on the build platen 16, as a reference point for Z-scale error detection.

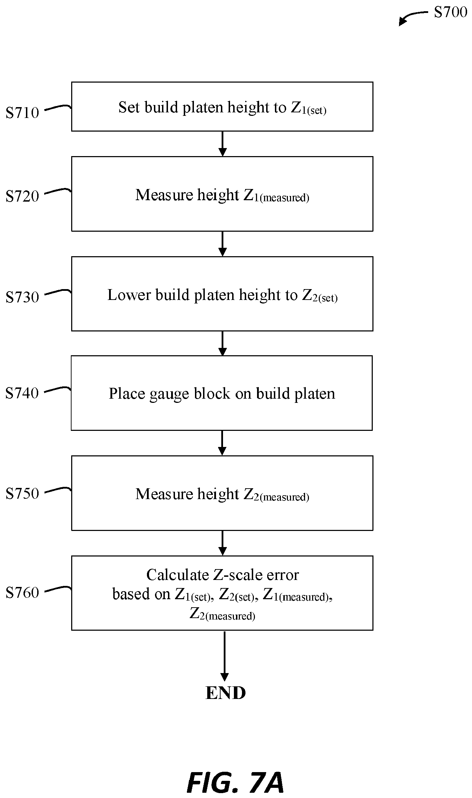

Fig. 7A illustrates an operation S700 for performing Z-scale calibration detection in the system by utilizing a gauge block, according to one embodiment. First, in step S710, the controller 20 controls the Z motor 120 to set the height of the build platen 16 to a first height $Z_{1(set)}$. In one embodiment, the height $Z_{1(set)}$ is at or near the highest height within the height measurement range of the laser scanner 15. In one embodiment, the height $Z_{1(set)}$ is a sufficient height that allows for lowering of the build platen 16 by at least an amount corresponding to the height of the gauge block.

In step S720, the controller 20 controls the laser scanner 15 to measure the height of the build platen 16 in the Z direction, and stores the measured height value $Z_{1(measured)}$ in the memory 21.

In step S730, the controller 20 controls the Z motor 120 to lower the height of the build platen 16 to a second height $Z_{2(set)}$. In one embodiment, the amount by which the build platen 16 is set to be lowered is equal to the height of the gauge block $Z_{block}$. That is,

$$Z_{2(set)} = Z_{1(set)} - Z_{block}.$$

In step S740, the gauge block is placed on the build platen 16 (e.g., by an operator).

In step S750, the controller 20 controls the laser scanner 15 to measure the height of the build platen 16 (with the gauge block provided thereon) in the Z direction, and stores the measured height value $Z_{2(measured)}$ in the memory 21.

In step S760, the controller 20 calculates the Z-scale error based on $Z_{1(set)}$, $Z_{2(set)}$, $Z_{1(measured)}$, and Z2(measured), and stores the error value in the memory 21.

In an ideal case devoid of Z-scale error, the two measured heights will be equal, i.e., $Z_{2(measured)} = Z_{1(measured)}$, since the actual lowered amount is equal to the set lowered amount. However, if a Z-scale error exists, these two measurements will differ from each other. The Z-scale error may be calculated as:

$$Error = \frac{Z_{2(measured)} - Z_{1(measured)}}{Z_{2(set)} - Z_{1(set)}}$$

It will also be appreciated that, instead of moving the build platen 16, the laser scanner 15 may alternatively be set at a single height, with the gauge block being placed on the build platen 16. Then, the controller 20 may collect two height measurements at two different X-Y positions, the first X-Y position being an area of the build platen 16 not covered by the gauge block, and the second X-Y position being an area of the build platen 16 having the gauge block placed thereon.

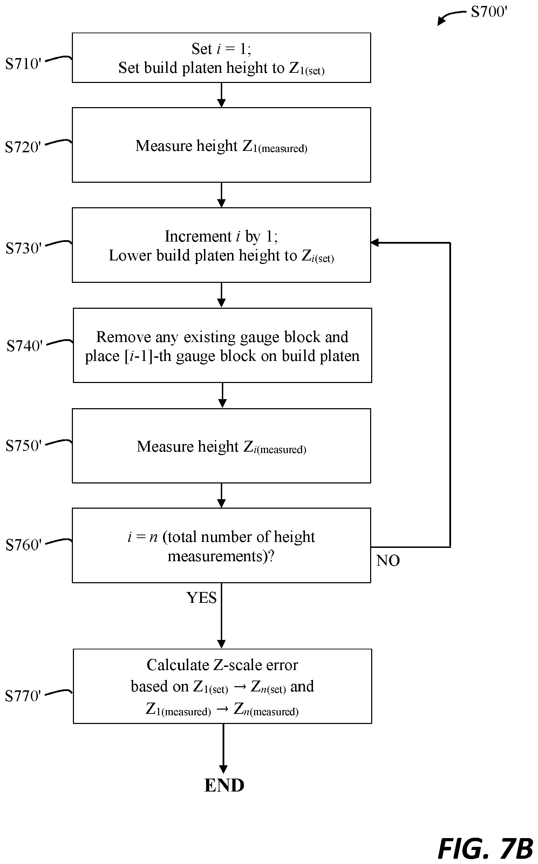

Fig. 7B illustrates an operation S700' for performing Z-scale calibration detection in the system by utilizing multiple gauge blocks, according to one embodiment. The operation of Fig. 7B differs from that of Fig. 7A by-instead of utilizing two heights and a single gauge block- moving the build platen 16 to 'n' number of heights $Z_{1(set)} \rightarrow Z_{n(set)}$ (based on [n-1] number of gauge blocks), and taking corresponding height measurements $Z_{1(measured)} \rightarrow Z_{n(measured)}$ to determine the Z-scale error. In describing this operation:

'n' represents the total number of height measurements to be collected (and [n-1] represents the total number of gauge blocks being used),
'i' represents the i-th height during the operation (where i increments by one for each successive height/gauge block), and [i-1] represents the [i-1]-th gauge block used at the i-th height,
$Z_{i(set)}$ represents the set height for the i-th height,
$Z_{block}$-[i-1] represents the predefined height of the [i-1]-th gauge block (used for the i-th height measurements starting at i = 2), and
$Z_{i(measured)}$ represents the measured height for the i-th height and [i-1]-th gauge block.

In one embodiment, the multiple gauge blocks are ordered from 1 to n according to increasing height, i.e., the [i+1]-th gauge block is taller than the i-th gauge block.

First, in step S710', the controller 20 sets i to 1, and controls the Z motor 120 to set the height of the build platen 16 to a first height $Z_{1(set)}$. In one embodiment, the height $Z_{1(set)}$ is at or near the highest height within the height measurement range of the laser scanner 15. In one embodiment, the height $Z_{1(set)}$ is a sufficient height that allows for lowering of the build platen 16 by at least an amount corresponding to the height of the highest of the n gauge blocks.

In step S720', the controller 20 controls the laser scanner 15 to measure the height of the build platen 16 in the Z direction, and stores the measured height value $Z_{1(measured)}$ in the memory 21.

In step S730', the controller 20 increments i by one, and controls the Z motor 120 to lower the height of the build platen 16 to the next (i.e., i-th) height $Z_{i(set)}$. In one embodiment, the build platen 16 is lowered by a set amount such that the aggregated amount of set lowering from $Z_{1(set)}$ is equal to the height $Z_{block}$-[$i$-1] of the corresponding (i.e., [$i$-1]-th) gauge block to be used in the next step S740'. That is, $Z_{1(set)} = Z_{1(set)} - Z_{block}$-[$i$-1].

In step S740', any gauge block currently placed on the build platen 16 is removed, and the [$i$-1]-th gauge block is placed on the build platen 16 (e.g., by an operator).

In step S750', the controller 20 controls the laser scanner 15 to measure the height of the build platen 16 (with the gauge block provided thereon) in the Z direction, and stores the measured height value $Z_{i(measured)}$ in the memory 21.

In step S760', the controller 20 determines whether the current number $i$ of height measurements (and [$i$-1] gauge blocks) has reached the total number $n$ of height measurements to be collected (and [$n$-1] gauge blocks), i.e., whether $i = n$. If the current number $i$ has not yet reached the total number $n$, the operation returns to step S730' to move the build platen 16 to the next height and collect the next height measurement using the next gauge block. If the current number $i$ has reached the total number $n$, the operation proceeds to step S770'.

In step S770', the controller 20 calculates one or more Z-scale error values based on $Z_{1(set)}$ through $Z_{n(set)}$ and $Z_{1(measured)}$ through $Z_{n(measured)}$, and stores the error value(s) in the memory 21. Such calculation(s) may be accomplished through various known approaches. For example, the controller 20 may utilize a linear regression model (e.g., linear least squares) to define the Z-scale error. In another example, the controller 20 may employ a higher-order regression model to define the Z-scale error.

In one embodiment, each successive gauge block is taller than the previous gauge block by a constant increment. In one embodiment, the height differences between successive gauge blocks differ.

In addition to a detached gauge block, the present invention includes Z-scale error detection using a gauge block integrated with the build platen 16. Such gauge block is preferably positioned at the perimeter of the build platen 16, so as to avoid interference with 3D printing operations.

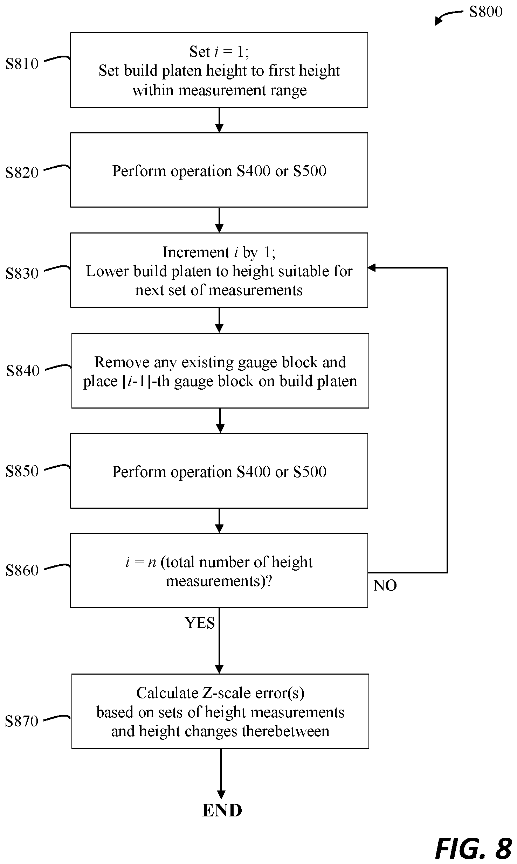

Fig. 8 illustrates an operation S800 for performing Z-scale calibration detection in the system by utilizing one or more gauge blocks, according to one embodiment. This operation may be particularly beneficial where the measurement range of the laser scanner 15 is less than the movement range of the build platen 16 (e.g., significantly less than such movement range). This operation may provide detection of localized Z-scale errors along the entire movement range of the build platen 16. This operation builds on the operations of Figs. 4 and/or 5. While the operations of Figs. 4 and/or 5 produce one set of height measurements based on heights within the measurement range of the laser scanner 15, the operation of Fig. 8 repeats these operations across the full measurement range of the laser scanner 15 to collect multiple sets of height measurements. To maintain the overall heights used for measurement within the measurement range of the laser scanner 15, one or more gauge blocks may be used. In describing this operation:

'$n$' represents the total number of sets of height measurements to be collected (and [$n$-1] represents the total number of gauge blocks being used), and '$i$' represents the $i$-th set of heights during the operation (where $i$ increments by one for each successive set of heights/each successive gauge block), and [$i$-1] represents the [$i$-1]-th gauge block used at the $i$-th set of heights.

In one embodiment, the multiple gauge blocks are ordered from 1 to $n$ according to increasing height, i.e., the [$i+1$]-th gauge block is taller than the $i$-th gauge block.

First, in step S810, the controller 20 sets $i$ to 1, and controls the Z motor 120 to set the height of the build platen 16 to a first height within the measurement range of the laser scanner 15.

In step S820, the controller 20 performs the operation S400 or S500 described in Fig. 4 or Fig. 5, thereby producing and storing a set of height measurements corresponding to multiple heights.

In step S830, the controller 20 increments i by one, and controls the Z motor 120 to lower the height of the build platen 16 to a height suitable for the next set of height measurements. In one embodiment, the build platen 16 is lowered by a set amount such that the aggregated amount of set lowering subsequent to step S810 is equal to the height of the corresponding (i.e., [$i$-1]-th) gauge block to be used in the next step S840.

In step S840, any gauge block currently placed on the build platen 16 is removed, and the [$i$-1]-th gauge block is placed on the build platen 16 (e.g., by an operator). The [$i$-1]-th gauge block has a height such that the combined current height of the build platen 16 and the gauge block places the top of the gauge block within the measurement range of the laser scanner 15, and the operation of Fig. 4 or Fig. 5 may be performed at such combined height while remaining within the measurement range of the laser scanner 15.

In step S850, the controller performs the operation S400 or S500 described in Fig. 4 or Fig. 5 based on the top surface of the gauge block, thereby producing and storing a set of height measurements corresponding to multiple heights.

In step S860, the controller 20 determines whether the current number $i$ of height measurement sets (and [$i$-1] gauge blocks) has reached the total number $n$ of height measurement sets to be collected (and [$n$-1] gauge blocks), i.e., whether $i = n$. If the current number $i$ has not yet reached the total number $n$, the operation returns to step S830 to move the build platen 16 to the next height and collect the next set of height measurements using the next gauge block. If the current number $i$ has reached the total number $n$, the operation proceeds to step S770'. Preferably, the height measurement sets are spaced so as to collectively span at least a substantial portion of the movement range of the build platen 16.

In step S870, the controller 20 calculates one or more Z-scale error values based on the collected sets of height measurements and the height changes performed in the instances of step S830 (which may correspond to the various gauge block heights), and stores the error value(s) in the memory 21. Such calculation(s) may be accomplished through various known approaches. For example, the controller 20 may utilize a linear regression model (e.g., linear least squares) to define the Z-scale error. In another example, the controller 20 may employ a higher-order regression model to define the Z-scale error. The one or more Z-scale error values may include localized errors specific to a particular portion of the movement range of the build platen 16.

It will be appreciated that, instead of using one or more gauge blocks, the operation of Fig. 8 may be performed by 3D-printing an object that serves as the equivalent of the gauge block(s). It will also be appreciated that the operation of Fig. 8 may further be performed at selected (or even every) layer during 3D printing, in which a partially-printed object is effectively used as an gauge block.

It will be appreciated that instead of the gauge blocks described herein being separate components, the gauge block(s) may alternatively or additionally be integrated with the build platen 16. It will also be appreciated that, instead of the integration of a gauge block, the build platen 16 may alternatively (or additionally) include a recessed area of a known depth. It will also be appreciated that instead of multiple gauge blocks being individual and separate components, a stepped gauge block (or recess) of different heights/depths may be used, and the operation may encompass moving the laser scanner 15 to the X-Y positions where these features are located and performing height measurements (e.g., after adjusting the height of the build platen 16 to ensure the combined height is within the measurement range of the laser scanner 15). In such instance, the measurement data and known expected heights may be used to determine the Z-scale error in manners similar to those described with reference to Fig. 5.

The present invention further includes variants that may be combined with the operations described herein (including at least those of Figs. 7A, 7B, and 8) without deviating from the spirit of the invention. For example, the gauge block(s) used with the calibration detection operation may be formed to include multiple heights (e.g., a stepped gauge block) with sufficient manufacturing accuracy to predefined values. The laser scanner 15 may be moved in the X and/or Y directions to additionally collect height measurements at some or all of the multiple gauge block heights (e.g., each step). Such approach may still be combined with adjusting the height of the build platen 16 to multiple heights, or alternatively may be used with the build platen 16 being held at a constant height. And such approaches may incorporate recesses instead of (or in addition to) gauge blocks to provide varying heights.

In another variant that may be combined with the operations described herein and above, the calibration detection operation may incorporate multiple sets of height measurements taken at different X-Y positions on the build platen 16 (and the gauge block(s), when placed or integrated thereon). By taking height measurements at multiple X-Y positions, the system may account for measurement errors induced by any imperfections on the surface of the build platen 16 and/or gauge block(s). In one embodiment, the X-Y positions are arranged in a grid pattern. In one embodiment, the X-Y positions are arranged at random. In one embodiment, the X-Y positions are based on continuous movement of the laser scanner 15 (e.g., including any print head on which the laser scanner 15 may be mounted) in the X and/or Y directions.

*Z-Scale Calibration Detection with Reference Bed*

Yet another aspect of the present invention includes utilizing a reference bed to perform Z-scale calibration detection. Various exemplary aspects of a reference bed that may be used with the invention are described.

One aspect of the present invention includes a reference bed that is installed on the apparatus, and an operation for detecting features on the reference bed to detect dimensional (e.g., Z-scale) errors. The present invention also incorporates an operation for compensating for the detected Z-scale errors.

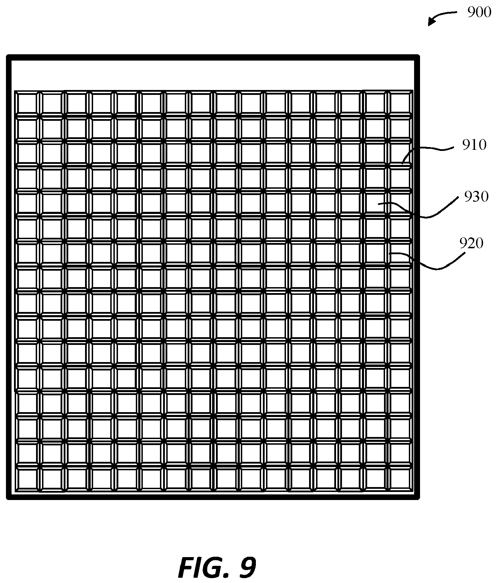

Fig. 9 illustrates a reference bed 900 that may be used in combination with an operation for detecting dimensional errors. In one embodiment, the reference bed 900 includes mounting hardware, such as bolts, that is compatible with mounting hardware of the build platen 16 of the apparatus 1000. As such, the reference bed may be attached to the apparatus 1000 in place of the print head when performing an operation to detect gantry errors. In one embodiment, the reference bed 900 has the same thickness, general shape, and/or weight as the build platen 16.

The reference bed 900 includes a plurality of grooves on its surface. In one embodiment, the grooves are arranged in a grid pattern, including both grooves 910 running along the horizontal (X) direction and grooves 920 running along the vertical (Y) direction. In one embodiment, the grooves running along each direction are spaced at equal intervals from one another. The placement of the grooves 910, 920 also result in islands 930 that are raised with respect to the bottoms of the grooves.

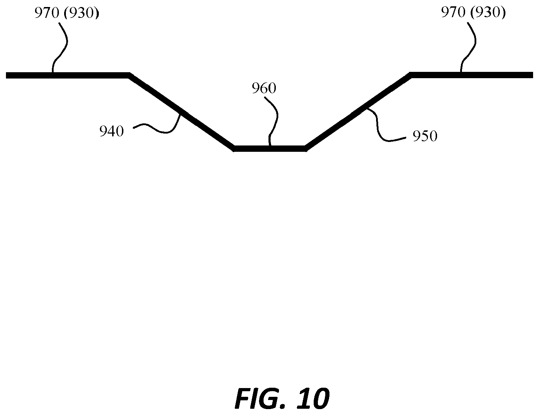

Fig. 10 illustrates, in a sectional view, the profile of one example of a groove on the reference bed 900. In one embodiment, the profile of each groove includes a left slope 940 and a right slope 950 intersecting at a lower landing 960, thereby forming a general V-shape into a top surface 970 of the reference bed. In one embodiment, the left slope 940 and the right slope 950 are symmetrical, and the lower landing 960 reflects the center of the groove. It will be appreciated that the specific number of grooves, groove depths and widths, and intervals between grooves may be selected based on various design considerations.

In one embodiment, the grooves are manufactured so as to be sufficiently straight and evenly spaced, such that the centers of the groove intersections form a sufficiently square grid. While it will be appreciated that realistic manufacturing limitations prevent an absolutely "perfect" groove, the reference bed 900 and its grooves are still preferably manufactured with at least sufficiently close tolerances which exceed the measurement resolution of the laser scanner 15. That is, the grooves are "perfectly" straight and evenly spaced from the perspective of the laser scanner's ability to detect them.

In one embodiment, the reference bed 900 is formed of a material with a low coefficient of thermal expansion. In one embodiment, the reference bed 900 is formed of aluminum. In one embodiment, the reference bed 900 is formed of a material with a known coefficient of thermal expansion, and preferably at a known and/or controlled temperature.

In the above description, the grooves 910, 920 in the reference bed 900 are arranged in a grid pattern, primarily due to its simplicity and convenience. However, it will be appreciated that the grooves 910, 920 in the reference bed 900 may alternatively be formed with other patterns of grooves, so long as the geometry of those patterns is known.

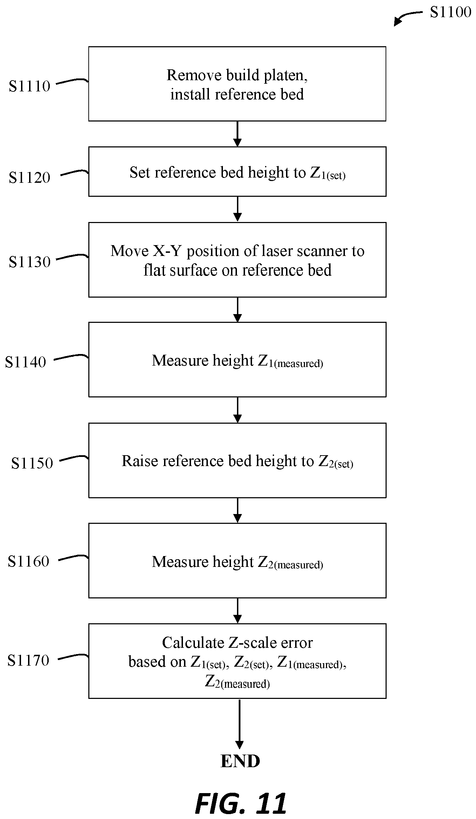

Fig. 11 illustrates an operation S1100 for performing Z-scale calibration detection in the system by utilizing a reference bed, according to one embodiment. First, in step S1110, the build platen 16 is removed and replaced with the reference bed 900. It will be appreciated that in a case that the reference bed 900 is alternatively configured to be placed on top of build platen 16 instead of replacing it, this step may be omitted.

In step S1120, the controller 20 controls the Z motor 120 to set the height of the reference bed 900 to a first height $Z_{1(set)}$. In one embodiment, the height $Z_{1(set)}$ is at or near the lowest height within the height measurement range of the laser scanner 15.

In step S1130, the controller 20 controls the X motor 116 and/or Y motor 118 to an X-Y position within the reference bed 900 which has a flat surface. Such X-Y position may include, but is not limited to, an island 930 or a perimeter of the reference bed 900.

In step S1140, the controller 20 controls the laser scanner 15 to measure the height, in the Z direction, of the reference bed 900 at the set X-Y position, and stores the measured height value $Z_{1(measured)}$ in the memory 21.

In step S1150, the controller 20 controls the Z motor 120 to raise the height of the reference bed 900 to a second height $Z_{2(set)}$. In one embodiment, the height $Z_{2(set)}$ is at or near the highest height within the height measurement range of the laser scanner 15.

In step S1160, the controller 20 controls the laser scanner 15 to measure the height, in the Z direction, of the reference bed 900 at the set X-Y position, and stores the measured height value $Z_{2(measured)}$ in the memory 21.

In step S1170, the controller 20 calculates the Z-scale error based on $Z_{1(set)}$, $Z_{2(set)}$, $Z_{1(measured)}$, and Z2(measured), and stores the error value in the memory 21.

Similar to the operation illustrated in Fig. 4, in an ideal case devoid of Z-scale error, the difference between the measured distances will equal the difference between the set distances, i.e., $Z_{2(measured)} - Z_{1(measured)}$ = $Z_{2(set)} - Z_{1(set)}$. However, if a Z-scale error exists, these two differences will differ from each other. The Z-scale error may be calculated as:

$$Error = \frac{Z_{2(measured)} - Z_{1(measured)}}{Z_{2(set)} - Z_{1(set)}}$$

It will be appreciated that, instead of collecting height measurements at two heights, the operation may instead collect height measurements at three or more heights, for instance, in the manner of the operation described above in Fig. 5. In such an instance, the system may utilize a linear (or higher-order) regression model to define the Z-scale error.

The present invention further includes variants that may be combined with the operations described herein without deviating from the spirit of the invention. For instance, the calibration detection operation may incorporate multiple sets of height measurements taken at different X-Y positions on the reference bed 900. By taking height measurements at multiple X-Y positions, the system may account for measurement errors induced by any imperfections on the surface of the reference bed 900. In one embodiment, the X-Y positions are arranged in a grid pattern. In one embodiment, the X-Y positions are arranged at random.

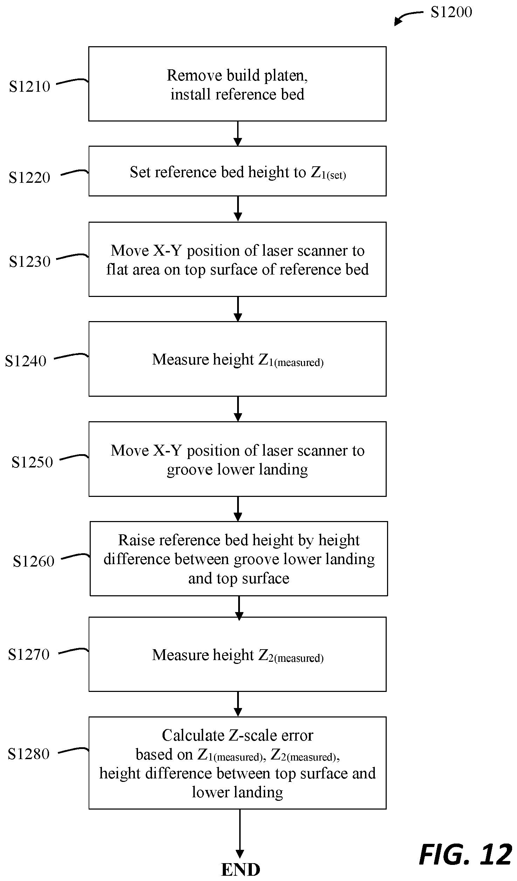

Fig. 12 illustrates an operation S1200 for performing Z-scale calibration detection in the system by utilizing a reference bed, according to one embodiment. First, in step S1210, the build platen 16 is removed and replaced with the reference bed 900. It will be appreciated that in a case that the reference bed 900 is alternatively configured to be placed on top of build platen 16 instead of replacing it, this step may be omitted.

In step S1220, the controller 20 controls the Z motor 120 to set the height of the reference bed 900 to a first height $Z_{1(set)}$. In one embodiment, the height $Z_{1(set)}$ is at or near the lowest height within the height measurement range of the laser scanner 15. However, it will be appreciated that any other set height may be used for this operation, as long as the heights of the islands 930 (or perimeter areas) and the lower landings 960 of the reference bed 900 are within the measurement range of the laser scanner 15.

In step S1230, the controller 20 controls the X motor 116 and/or Y motor 118 to an X-Y position within the reference bed 900 having a flat area and forming the top surface 970 of the reference bed 900. For instance, such an X-Y position may include an island 930 or a perimeter of the reference bed 900.

In step S1240, the controller 20 controls the laser scanner 15 to measure the height, in the Z direction, of the reference bed 900 at the set X-Y position, and stores the measured height value $Z_{1(measured)}$ in the memory 21.

In step S1250, the controller 20 controls the X motor 116 and/or Y motor 118 to an X-Y position within the reference bed 900 having a flat surface and forming a grooved bottom of the reference bed 900. For instance, such an X-Y position may include a lower landing 960 of a groove of the reference bed 900.

In step S1260, the controller 20 controls the Z motor 120 to raise the height of the reference bed 900 to a second height $Z_{2(set)}$. In one embodiment, the difference between the set heights $Z_{1(set)}$ and $Z_{2(set)}$ is equal to a known height difference between the top surface 970 (e.g., island 930 or perimeter of the reference bed 900) and the lower landings 960 of the grooves of the reference bed.

In step S1270, the controller 20 controls the laser scanner 15 to measure the height, in the Z direction, of the reference bed 900 at the set X-Y position, and stores the measured height value $Z_{2(measured)}$ in the memory 21.

In step S1280, the controller 20 calculates the Z-scale error based on $Z_{1(measured)}$, $Z_{2(measured)}$, and the known height difference between the top surface 970 (e.g., island 930 or perimeter of the reference bed 900) and the lower landings 960 of the grooves of the reference bed. The controller 20 stores the error value in the memory 21. Such calculation of the Z-scale error may be similar to the calculations described with reference to Fig. 4.

In addition to the reference bed 900 having grooves thereon, the present invention includes a reference bed 900 having a gauge block integrated thereon. Such gauge block is preferably positioned at a perimeter of the reference bed 900, so as to avoid interference with the grooves.

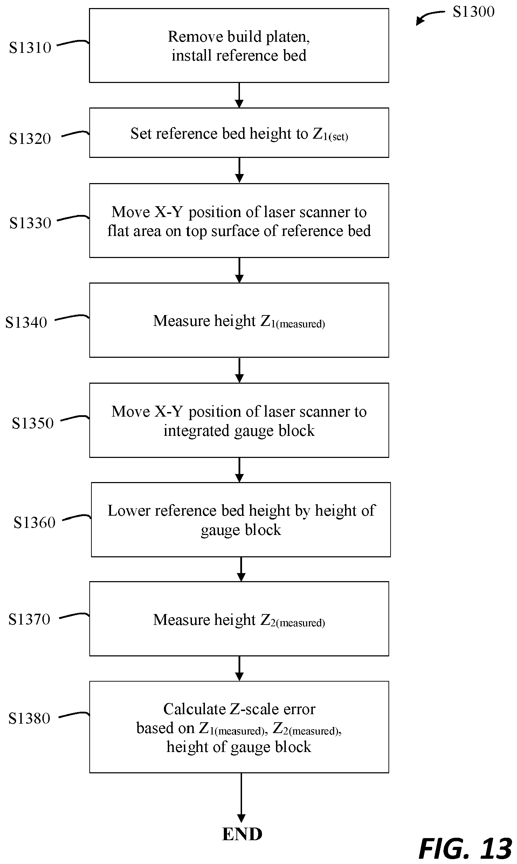

Fig. 13 illustrates an operation S1300 for performing Z-scale calibration detection in the system by utilizing a gauge block integrated with the reference bed 900, according to one embodiment. First, in step S1310, the build platen 16 is removed and replaced with the reference bed 900. It will be appreciated that in a case that the reference bed 900 is alternatively configured to be placed on top of build platen 16 instead of replacing it, this step may be omitted.

In step S1320, the controller 20 controls the Z motor 120 to set the height of the reference bed 900 to a first height $Z_{1(set)}$. In one embodiment, the height $Z_{1(set)}$ is at or near the lowest height within the height measurement range of the laser scanner 15. However, it will be appreciated that any other set height may be used for this operation, as long as the heights of the islands 930 (or perimeter areas), the lower landings 960, and the integrated gauge block of the reference bed 900 are within the measurement range of the laser scanner 15.

In step S1330, the controller 20 controls the X motor 116 and/or Y motor 118 to an X-Y position within the reference bed 900 having a flat area and forming the top surface 970 of the reference bed 900. For instance, such an X-Y position may include an island 930 or a perimeter of the reference bed 900.

In step S1340, the controller 20 controls the laser scanner 15 to measure the height, in the Z direction, of the reference bed 900 at the set X-Y position, and stores the measured height value $Z_{1(measured)}$ in the memory 21.

In step S1350, the controller 20 controls the X motor 116 and/or Y motor 118 to an X-Y position within the reference bed 900 having the integrated gauge block. For instance, such an X-Y position may include a perimeter of the reference bed 900.

In step S1360, the controller 20 controls the Z motor 120 to lower the height of the reference bed 900 to a second height $Z_{2(set)}$. In one embodiment, the difference between the set heights $Z_{1(set)}$ and $Z_{2(set)}$ is equal to a known height of the gauge block with reference to the top surface 970 (e.g., island 930 or perimeter) of the reference bed 900.

In step S1370, the controller 20 controls the laser scanner 15 to measure the height, in the Z direction, of the reference bed 900 at the set X-Y position, and stores the measured height value $Z_{2(measured)}$ in the memory 21.

In step S1380, the controller 20 calculates the Z-scale error based on $Z_{1(measured)}$, $Z_{2(measured)}$, and a known height of the integrated gauge block. The controller 20 stores the error value in the memory 21. Such calculation of the Z-scale error may be similar to the calculations described with reference to Fig. 4.

It will be appreciated that, instead of the integration of a gauge block, the reference bed 900 may alternatively (or additionally) include a recessed area of a known depth. It will also be appreciated that instead of multiple gauge blocks being individual and separate components, a stepped gauge block (or recess) of different heights/depths may be used, and the operation may encompass moving the laser scanner 15 to the X-Y positions where these features are located and performing height measurements (e.g., after adjusting the height of the build platen 16 to ensure the combined height is within the measurement range of the laser scanner 15). In such instance, the measurement data and known expected heights may be used to determine the Z-scale error in manners similar to those described with reference to Fig.

5.

It will further be appreciated that the operation of Fig. 13 may be combined with the measurements of lower landings 960 as described with reference to Fig. 12, to collect additional height measurement points towards determining the Z-scale error.

It will still further be appreciated that the operation of Fig. 13 may be combined with the operation of Fig. 8, to provide height measurements over a larger portion of the movement range of the reference bed 900.

It will be appreciated that for any of the Z-scale calibration detection methods described herein, instead of beginning at one end of the height range and moving towards the other end of the height range, the method could alternatively begin at the other end and move towards the one end. For example, instead of beginning at the lowest of the set heights and raising the build platen 16 to take the subsequent height measurement(s), the system may alternatively begin at the highest of the set heights and lower the build platen 16 to take the subsequent height measurement(s). In such instance, it will be appreciated that various aspects of the steps described above may be reversed to accommodate the opposite direction, without deviating from the spirit of the present invention.

It will also be appreciated that for any of the Z-scale calibration detection methods described therein, the system may apply further compensation to account for thermal stability. For example, a linear or higher-order correction may be applied to height measurement values based on a detected temperature. Such correction may be based on predefined settings or may be individualized.

It will still additionally be appreciated for any of the Z-scale calibration detection methods described therein, the system may apply backlash correction to further compensate for backlash, such as the approaches described U.S. Patent Application Publication No. 2020/0361155, which is incorporated herein in its entirety.

*Z-Scale Calibration Correction*

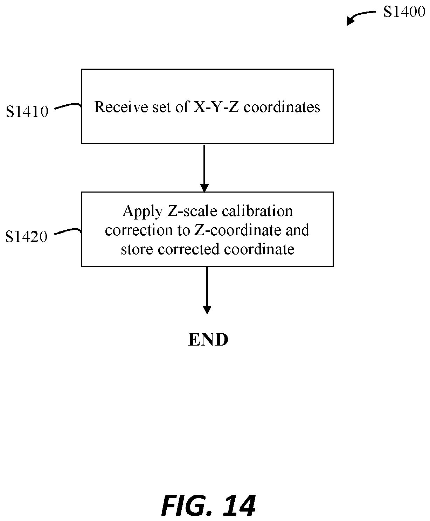

Fig. 14 illustrates an operation to correct for Z-scale errors, once such error has been determined. In step S1410, the controller 20 receives one or more X-Y-Z coordinates. Such coordinates may be, for example, coordinates defining points for 3D printing or coordinates collected as measurement data. In step S1420, the controller applies the Z-scale calibration correction to the Z-coordinate of the X-Y-Z coordinate, and stores the corrected coordinate. For instance, in the case of the Z-scale error being defined according to a linear model, a linear transformation is applied to the Z-coordinate. In the case of a higher-order model being used, such transformation is applied to the Z-coordinate. The updated X-Y-Z coordinate is then used for its slated purpose.

*Misalignment Calibration*

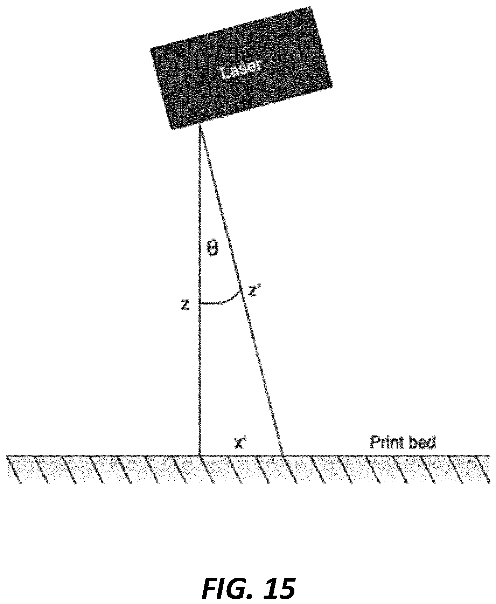

In one aspect of the present invention, the system detects and compensates for misalignment of the laser scanner 15. Fig. 15 illustrates an example of such misalignment and the errors resulting from such misalignment. As shown in Fig. 15, the laser scanner 15 is designed to emit a light beam in the vertical direction, and the actual distance between the laser scanner 15 and the build platen 16 is z. However, since the laser scanner 15 is misaligned by an angle θ, the laser scanner 15 measures the distance as z'. In addition, a lateral offset of x' exists between the expected measurement point and the actual measurement point. Such misalignment of the laser scanner 15 may occur due to, for example, tolerances in the mounting hardware (e.g., Z screw) of the laser scanner 15. As can be seen from Fig. 15, once the misalignment angle θ is known, the offset amounts may be determined via trigonometry:

$$z = z' * \cos(\theta)$$

$$x' = z' * \sin(\theta)$$

It will be appreciated that, in addition to an angular misalignment in the X direction, an angular misalignment may independently also exist in the Y direction.

In one embodiment, the system detects the misalignment of the laser scanner 15 using the reference bed 900 described above. Such a detection operation involves first detecting the centers of the intersections of the grooves 910, 920 of the reference bed 900.

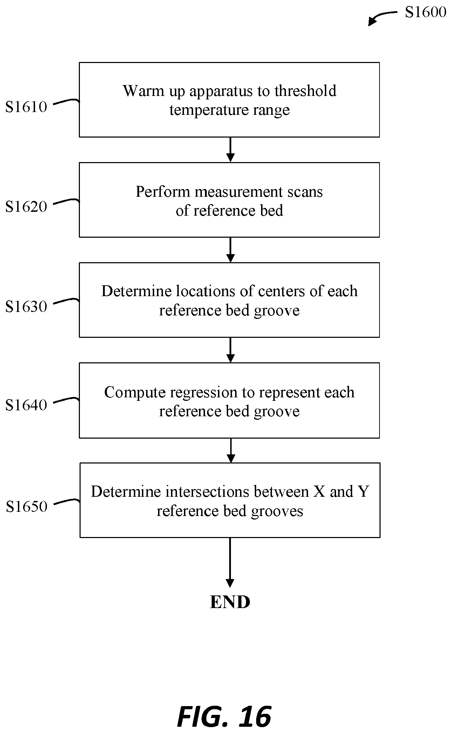

Fig. 16 illustrates an operation for detecting the centers of the intersections of the grooves 910, 920 of the reference bed 900, according to one embodiment. In step S1610, the apparatus and the reference bed are warmed up to a threshold temperature range. This step ensures that the reference bed characteristics do not deviate from its design due to thermal expansion during scanning, and ensures the calibration is representative of a printer while it is printing (as opposed to a cold printer).

In step S1620, the apparatus 1000 performs measurement scans along the surface of the reference bed using the laser scanner 15. In one embodiment, the laser scanner 15 performs measurement scans in both X and Y directions to detect the positions of the reference bed grooves. For instance, to detect the positions along a particular X position of the horizontal grooves 910, the laser scanner 15 may scan along the Y direction while holding at the particular X position, taking depth measurements at intervals along the Y direction. As described below, these depth measurements may be employed to detect the centers of all horizontal grooves 910 at the particular X position. The laser scanner may repeat these Y-direction scans at multiple X positions (e.g., at predetermined intervals along the X direction) to detect the positions of the horizontal grooves 910 throughout the entire reference bed 900.

To detect the positions along a particular Y position of the vertical grooves 920, the laser scanner 15 may scan along the X direction while holding at the particular Y position, taking depth measurements at intervals along the X direction. As described below, these depth measurements may be employed to detect the centers of all vertical grooves 920 at the particular Y position. The laser scanner may repeat these X-direction scans at multiple Y positions (e.g., at predetermined intervals along the Y direction) to detect the positions of the vertical grooves 920 throughout the entire reference bed 900.

In one embodiment, the laser scanner 15 performs the X-direction and Y-direction scans using the profile-scanning mode described above, while continuously moving in the respective scan direction to conduct the scan. In one embodiment, the left slope 940 and the right slope 950 of each groove has a slope sufficiently flat such that the laser scanner 15 may accurately profile-scan sample points on the slopes.

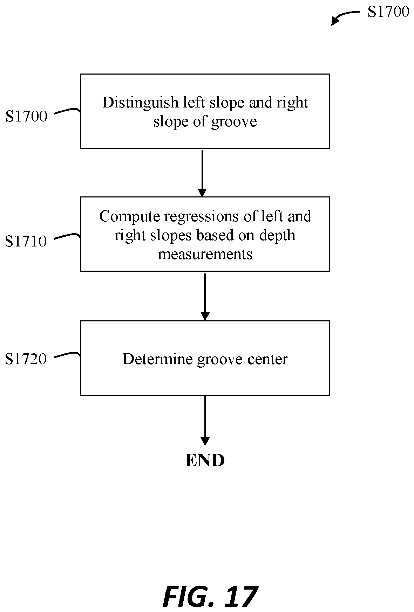

In step S1630, the controller 20 determines the locations of centers of each reference bed groove for the scan measurement data collected in step S1620. That is, for each Y-direction scan along each X position, the controller 20 determines the center point 1820 of each horizontal groove 910 at that X position. And, for each X-direction scan along each Y position, the controller 20 determines the center point 1820 of each vertical groove 920 at that Y position. Various known approaches for analyzing the topologies of the measurement scans may be employed for this determination, such as algorithms used for surface and topographical analysis. Alternatively, one novel example of performing step S1630 that may yield more accurate groove center point determinations is illustrated in Fig. 17 and described in detail below.

In step S1640, the controller 20 computes a regression to represent each horizontal groove 910 and vertical groove 920. That is, for each horizontal groove 910, the determinations made in step S1630 reveal the Y positions of the groove center along the X direction. In the case that no gantry errors are present, the Y positions for the groove center of the horizontal groove 910 will remain constant along the X direction (i.e., perfectly horizontal). On the other hand, in the case that the X-rails and Y-rails are skewed (i.e., not perfectly aligned at 90 degrees), the Y positions for the groove center of the horizontal groove 910 will change along the X direction. The controller 20 computes a regression representing that horizontal groove 910 from these X and Y positions of the groove center.

Similarly, for each vertical groove 920, the determinations made in step S1630 reveal the X positions of the groove center along the Y direction. In the case that no gantry errors are present, the X positions for the groove center of the vertical groove 1520 will remain constant along the Y direction (i.e., perfectly vertical). On the other hand, in the case that the X-rails and Y-rails are skewed (i.e., not perfectly aligned at 90 degrees), the X positions for the groove center of the vertical groove 1520 will change along the Y direction. The controller 20 computes a regression representing that horizontal groove 1510 from these X and Y positions of the groove center.

The specific regression employed for this step may depend on the desired accuracy. In one embodiment, a linear regression is used for this step. In one embodiment, a higher-order (e.g., polynomial) regression is used for this step.

In step S1650, the controller 20 determines the locations of intersection points between horizontal grooves 1510 and vertical grooves 1520, based on the regressions computed in step S1640. In one embodiment, the controller 20 generates a two-dimensional array of the X-Y locations of intersection points between horizontal grooves 1510 and vertical grooves 1520.

In one embodiment, a single measurement of the reference bed is performed. In one embodiment, multiple measurements of the reference bed are performed, and a transformation is generated based on the multiple measurements.

Fig. 17 illustrates one example of steps that may be employed to perform step S1630 of determining the locations of the center of each groove. The inventors recognized that determining the precise location of a groove center from depth measurements themselves may be difficult, due to resolution limitations and noise. For example, the depth measurements, by themselves, may not locate an accurate groove center unless a depth measurement is conducted precisely at the groove center location. Therefore, a need exists to more precisely identify the location of the groove center.

In step S1700, the controller 20 distinguishes, at least on a coarse basis, the areas of the left and right slopes of each V-shaped groove using measurements taken along a scan by the laser scanner 15. For instance, with reference to Fig. 15, the controller 20 may distinguish the left slope 940 based on continually increasing depth measurements during a measurement scan moving from left to right. The controller 20 may distinguish the right slope 950 based on subsequent depth measurements that begin to decrease after encountering the left slope 940.

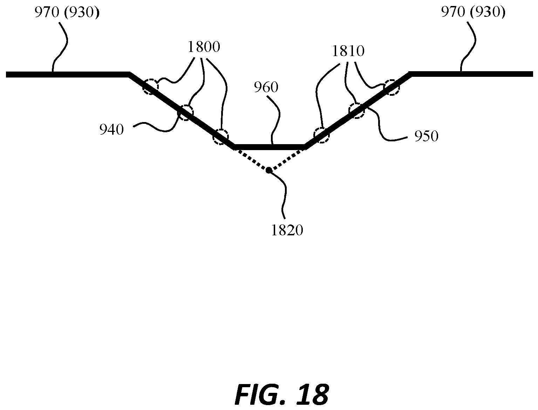

In step S1710, the controller 20 isolates the depth measurements falling within the area of the left slope 940 as distinguished in step S1700 (examples illustrated in Fig. 18 as depth measurements 1800), and computes a regression representing the left slope 940 based on these depth measurements. The controller 20 also isolates the depth measurements falling within the area of the right slope 950 as distinguished in step S1700 (examples illustrated in Fig. 18 as depth measurements 1810), and computes a regression representing the right slope 950. In one embodiment, the computed regressions are linear regressions. In one embodiment, the computed regressions are higher-order (e.g., polynomial) regressions.

In step S1720, the controller 20 determines the groove center 1820 based on the intersections of the two regressions computed in step S1710. Using this approach, the groove center 1820 may be accurately determined even if that precise location was not subject to a depth measurement during the measurement scan, and sub-scan resolution positioning accuracy may be realized.

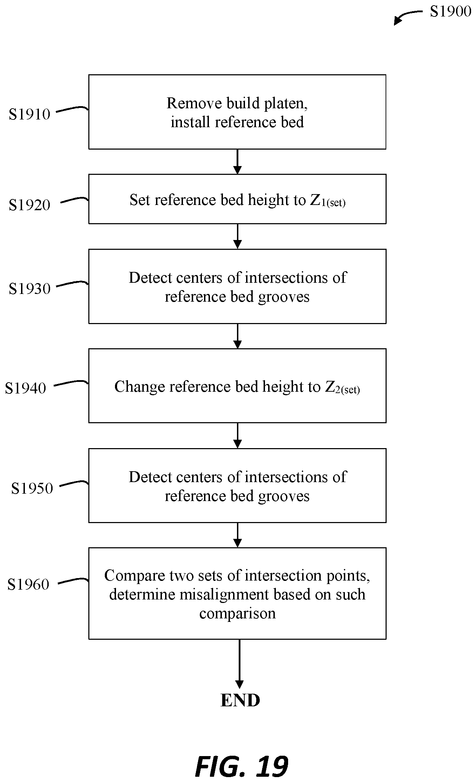

Fig. 19 illustrates an operation S1900 to detect misalignment of the laser scanner 15, using the reference bed 900. First in step S1910, the reference bed 900 is installed on the apparatus.

In step S1920, the controller 20 controls the Z motor 120 to set the height of the reference bed 900 to a first height $Z_{1(set)}$. In one embodiment, the height $Z_{1(set)}$ is at or near the lowest height within the height measurement range of the laser scanner 15.

In step S1930, the controller 20 performs an operation for detecting the centers of the intersections of the grooves 910, 920 of the reference bed 900 is performed. Such an operation may include the operation described above in Fig. 16. The controller 20 saves the set of intersection points in the memory 21.

In step S1940, the controller 20 controls the Z motor 120 to set the height of the reference bed 900 to a second height $Z_{2(set)}$. In one embodiment, the height $Z_{2(set)}$ is at or near the highest height within the height measurement range of the laser scanner 15.

In step S1950, the controller 20 performs an operation for detecting the centers of the intersections of the grooves 910, 920 of the reference bed 900 is performed. Such an operation may include the operation described above in Fig. 16. The controller 20 saves the second set of intersection points in the memory 21.

In step S1960, the controller 20 compares the intersection points at $Z_{1(set)}$ with the intersection points at $Z_{2(set)}$, determines the misalignment based on such comparison, and stores the misalignment in the memory 21.

In an ideal case devoid of misalignment, the two sets of intersection points will coincide with each other without any offset. However, if a misalignment exists, these two differences will be offset from one another. Based on (i) the difference between $Z_{1(set)}$ and $Z_{2(set)}$ and (ii) the amount of X and Y offsets between the two sets of intersection points, the controller 20 may determine the amounts of angular misalignment along the X and Y directions.

It will appreciated that, instead of collecting sets of intersection points at two heights, the operation may instead collect sets of intersection points at three or more heights. In such an instance, the system may utilize a linear (or higher-order) regression model to define the X and Y angular misalignments.

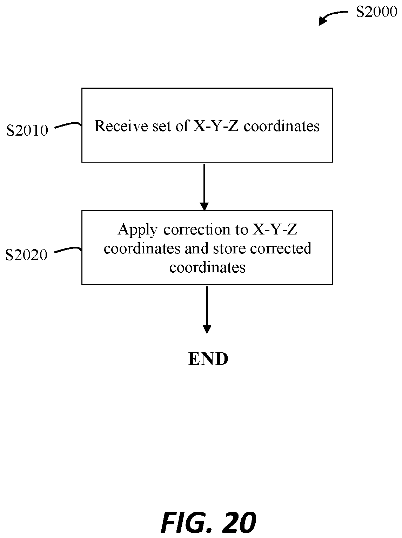

Fig. 20 illustrates an operation to correct for laser scanner misalignment, once such misalignment error has been determined. In step S1410, the controller 20 receives one or more X-Y-Z coordinates. Such coordinates may be, for example, coordinates defining points for collecting measurement data, including that of scanning an object for printing accuracy and that of performing the Z-scale detection described herein. In step S1420, the controller applies the misalignment correction to the X-, Y-, and/or Z-coordinate(s) of the X-Y-Z coordinate and stores the new coordinate(s). For instance, in the case of an X angular misalignment, the X-coordinate may be corrected based on the X angular misalignment angle (and similarly for the Y-coordinate based on a Y angular misalignment), according to trigonometric principles. And, the Z-coordinate may likewise be corrected based on the X and Y angular misalignment angles. The updated X-Y-Z coordinate is then used for its slated purpose.

In one embodiment of the present invention, the misalignment detection is performed prior to performing Z-scale calibration detection, and the results of the misalignment detection are applied to correct the Z-scale calibration detection.

In one embodiment, a gauge block (e.g., stepped gauge block) is used instead of the reference bed 900. In one embodiment, an angled gauge block (e.g., having a inclined surface of accurate and known slope) is used instead of the reference bed 900, and the angular misalignment is determined by taking collecting height measurements at multiple measurement points along the inclined surface, calculating an incline based on the height measurements and X-Y locations of the measurement points (e.g., using linear regression), and comparing the incline with the known slope of the angled gauge block.

*Other Embodiments*

In one embodiment, a touch probe, ultrasonic measurement device, dial indicator, or other measurement device is employed instead of (or in addition to) the laser scanner 15 to perform depth/distance measurements.

In one embodiment, the print nozzle is used instead of (or in addition to) the laser scanner 15 to perform a contact-sensing operation to perform depth/distance measurements. In particular, the apparatus 1000 is equipped with detection capabilities for detecting when the nozzle 10 (and/or nozzle 18) contacts the build platen 16, a print layer, and/or a print material bead. By moving the nozzle 10 along the X, Y, and/or Z directions and detecting when contact occurs between the nozzle 10 and the print layer, the apparatus 1000 may take measurements of sample points on the print layer. For example, the nozzle 10 may be moved to the X-Y position of the sample point and lowered until contact is detected, and the Z-position at the time of contact is used to determine the measurement.

*Controller*

The controller 20 controls the printing and laser scanning aspects of the apparatus 1000, including controlling the motors 116, 118, 120, the print head(s) 10, 18, and the laser scanner 15. The controller 20 operates the laser scanner 15 and collects data for measured distances/heights.

The controller 20 may be formed as a single processor or a set of multiple processors. For instance, the controller 20 may be formed of a combination of a user interface controller, print control processor, an image processing processor, a laser scanner control processor, and/or a general processor. In one embodiment, all processors of the controller 20 are locally provided in the apparatus 1000. In one embodiment, at least one processor of the controller 20 is located remote from the apparatus 1000. The controller 20 is coupled to the memory 21, which may include flash memory, RAM, and/or other volatile or non-volatile storage to store programs and active instructions for the controller 20 and data involved in operating the apparatus 1000.

The apparatus 1000 may further include an additional breakout board, which may include a separate microcontroller, that provides a user interface and connectivity to the controller 20. The apparatus 1000 may include an Ethernet controller that connects the controller 20 to a local wired network and/or an 802.11 Wi-Fi transceiver that connects the controller 20 to a local wireless network. These controllers may also connect the controller 20 to the Internet at large so as to send and receive remote inputs, commands, and control parameters. The apparatus 1000 may include a USB interface to connect the controller 20 to external peripherals or storage devices. The apparatus 1000 may include a touch screen display panel 128 to provide user feedback and accept inputs, commands, and control parameters from the user. The apparatus 1000 may include additional display(s), visual indicators (e.g., LEDs), and/or audio indicators (e.g., speaker) to indicate functionality and/or status to an operator, and may include additional input devices (e.g., keyboard, mouse, trackpad, buttons) to receive input from an operator.

Incorporation by reference is hereby made to U.S. Patent No. 10,076,876, U.S. Patent No. 9,149,988, U.S. Patent No. 9,579,851, U.S. Patent No. 9,694,544, U.S. Patent No. 9,370,896, U.S. Patent No. 9,539,762, U.S. Patent No. 9,186,846, U.S. Patent No. 10,000,011, U.S. Patent No. 10,464,131, U.S. Patent No. 9,186,848, U.S. Patent No. 9,688,028, U.S. Patent No. 9,815,268, U.S. Patent No. 10,814,558 U.S. Patent Application Publication No. 2016/0107379, U.S. Patent Application Publication No. 2018/0154439, U.S. Patent Application Publication No. 2018/0154580, U.S. Patent Application Publication No. 2018/0154437, U.S. Patent Application Publication No. 2019/0009472, U.S. Patent Application Publication No. 2020/0371509, U.S. Patent Application Publication No. 2020/0361155, and U.S. Patent Application No. 15/459,965, filed on March 15, 2017 and entitled "SCANNING PRINT BED AND PART HEIGHT IN 3D PRINTING," in their entireties.

Although this invention has been described with respect to certain specific exemplary embodiments, many additional modifications and variations will be apparent to those skilled in the art in light of this disclosure. For instance, while reference has been made to an X-Y Cartesian coordinate system, it will be appreciated that the aspects of the invention may be applicable to other coordinate system types (e.g., radial). It is, therefore, to be understood that this invention may be practiced otherwise than as specifically described. Thus, the exemplary embodiments of the invention should be considered in all respects to be illustrative and not restrictive, and the scope of the invention to be determined by any claims supportable by this application and the equivalents thereof, rather than by the foregoing description.

The following clauses define various aspects and optional features of the disclosure:

Clause 1: An apparatus comprising:

at least one processor; and
at least one memory,
wherein the at least one memory stores computer-readable instructions which, when executed by the at least one processor, cause the processor to:

control a height adjustment mechanism to adjust a height of a surface of the apparatus, to a first control height;
control a height measurement mechanism to perform a first height measurement when the height adjustment mechanism is controlled to be at the first control height;
control the height adjustment mechanism to adjust the height of the surface, to one or more additional control heights;
control the height measurement mechanism to perform one or more additional height measurements when the height adjustment mechanism is controlled to be at respective heights of the one or more additional first control heights; and
calculate a scaling error of the height adjustment mechanism based on the first height measurement, the one or more additional height measurements, the first control height, and the one or more additional control heights.

Clause 2: The apparatus of Clause 1, wherein the scaling error is calculated based on (i) a difference between height measurements and (ii) a difference between control heights.

Clause 3: The apparatus of Clause 1, wherein the calculating of the Z-scale error includes performing a regression.

Clause 4: The apparatus of Clause 1, wherein the scaling error is calculated based on (i) a difference between height measurements, (ii) a difference between control heights, and (iii) a height of a gauge block that is present on the surface during at least one of the height measurements.

Clause 5: The apparatus of Clause 1, wherein the height measurement mechanism includes a laser scanner.

Clause 6: The apparatus of Clause 1, wherein the apparatus is a 3D printing apparatus,

> wherein the surface is a print platform of the 3D printing apparatus or a reference platform of the 3D printing apparatus, and
> wherein the scaling error is a Z-scale error of the 3D printing apparatus.

Clause 7: The apparatus of Clause 6, wherein the 3D printing apparatus controls printing of a 3D object by correcting Z-coordinates based on the calculated Z-scale error.

Clause 8: A method comprising:

> controlling a height adjustment mechanism to adjust a height of a surface of the apparatus, to a first control height;
> controlling a height measurement mechanism to perform a first height measurement when the height adjustment mechanism is controlled to be at the first control height;
> controlling the height adjustment mechanism to adjust the height of the surface, to one or more additional control heights;
> controlling the height measurement mechanism to perform one or more additional height measurements when the height adjustment mechanism is controlled to be at respective heights of the one or more additional first control heights; and
> calculating a scaling error of the height adjustment mechanism based on the first height measurement, the one or more additional height measurements, the first control height, and the one or more additional control heights.

Clause 9: The method of Clause 8, wherein the scaling error is calculated based on (i) a difference between height measurements and (ii) a difference between control heights.

Clause 10: The method of Clause 8, wherein the calculating of the Z-scale error includes performing a regression.

Clause 11: The method of Clause 8, wherein the scaling error is calculated based on (i) a difference between height measurements, (ii) a difference between control heights, and (iii) a height of a gauge block that is present on the surface during at least one of the height measurements.

Clause 12: The method of Clause 8, wherein the height measurement mechanism includes a laser scanner.

Clause 13: The method of Clause 8, wherein the surface is a print platform of a 3D printing apparatus or a reference platform of the 3D printing apparatus, and
wherein the scaling error is a Z-scale error of the 3D printing apparatus.

Clause 14: The method of Clause 13, further comprising controlling printing of a 3D object by correcting Z-coordinates based on the calculated Z-scale error.

Clause 15: An apparatus comprising:

> at least one processor; and
> at least one memory,
> wherein the at least one memory stores computer-readable instructions which, when executed by the at least one processor, cause the processor to:
>
>> control a height adjustment mechanism to adjust a height of a surface of the apparatus, to a first control height;
>> control a measurement mechanism to measure first positions of a plurality of features positioned at different locations on the surface;
>> control the height adjustment mechanism to adjust the height of the surface, to a second control height;
>> control the measurement mechanism to measure second positions of the plurality of features; and
>> calculate an alignment error based on (i) differences between the first positions and the second positions and (ii) a difference between the first control height and the second control height.

Clause 16: The apparatus of Clause 15, wherein the apparatus is a 3D printing apparatus, and
wherein the surface is a surface of a reference platform of the 3D printing apparatus.

Clause 17: The apparatus of Clause 16, wherein the measurement mechanism is a laser scanner,

wherein the detected first and second positions are X-Y positions, and
wherein the calculated alignment error corresponds to a deviation of the laser scanner relative to the X-Y plane.

Clause 18: The apparatus of Clause 17, wherein the 3D printing apparatus compensates for measurements collected from the measurement mechanism based on the calculated alignment error.

Clause 19: A method comprising:

controlling a height adjustment mechanism to adjust a height of a surface of the apparatus, to a first control height;
controlling a measurement mechanism to measure first positions of a plurality of features positioned at different locations on the surface;
controlling the height adjustment mechanism to adjust the height of the surface, to a second control height;
controlling the measurement mechanism to measure second positions of the plurality of features; and
calculating an alignment error based on (i) differences between the first positions and the second positions and (ii) a difference between the first control height and the second control height.

Clause 20: The method of Clause 19, wherein the surface is a surface of a reference platform of a 3D printing apparatus.

Clause 21: The method of Clause 20, wherein the measurement mechanism is a laser scanner,

wherein the detected first and second positions are X-Y positions, and
wherein the calculated alignment error corresponds to a deviation of the laser scanner relative to the X-Y plane.

Clause 22: The method of Clause 21, further comprising compensating for measurements collected from the measurement mechanism based on the calculated alignment error.

**Claims**

1. An apparatus comprising:

at least one processor; and
at least one memory,
wherein the at least one memory stores computer-readable instructions which, when executed by the at least one processor, cause the processor to:

control a height adjustment mechanism to adjust a height of a surface of the apparatus, to a first control height;
control a height measurement mechanism to perform a first height measurement when the height adjustment mechanism is controlled to be at the first control height;
control the height adjustment mechanism to adjust the height of the surface, to one or more additional control heights;
control the height measurement mechanism to perform one or more additional height measurements when the height adjustment mechanism is controlled to be at respective heights of the one or more additional first control heights; and
calculate a scaling error of the height adjustment mechanism based on the first height measurement, the one or more additional height measurements, the first control height, and the one or more additional control heights.

2. The apparatus of Claim 1, wherein the scaling error is calculated based on (i) a difference between height measurements and (ii) a difference between control heights,

wherein the calculating of the Z-scale error includes performing a regression, or
wherein the scaling error is calculated based on (i) a difference between height measurements, (ii) a difference between control heights, and (iii) a height of a gauge block that is present on the surface during at least one of the height measurements.

3. The apparatus of Claim 1 or Claim 2, wherein the height measurement mechanism includes a laser scanner.

4. The apparatus of any preceding claim, wherein the apparatus is a 3D printing apparatus,

wherein the surface is a print platform of the 3D printing apparatus or a reference platform of the 3D printing apparatus,
wherein the scaling error is a Z-scale error of the 3D printing apparatus, and wherein optionally the 3D printing apparatus controls printing of a 3D object by correcting Z-coordinates based on the calculated Z-scale error.

5. A method comprising:

controlling a height adjustment mechanism to adjust a height of a surface of the apparatus, to a first control height;
controlling a height measurement mechanism to perform a first height measurement when the height adjustment mechanism is controlled to be at the first control height;
controlling the height adjustment mechanism to adjust the height of the surface, to one or more additional control heights;
controlling the height measurement mechanism to perform one or more additional height measurements when the height adjustment mechanism is controlled to be at respective heights of the one or more additional first control heights; and
calculating a scaling error of the height adjustment mechanism based on the first height measurement, the one or more additional height measurements, the first control height, and the one or more additional control heights.

6. The method of Claim 5, wherein the scaling error is calculated based on (i) a difference between height measurements and (ii) a difference between control heights,

wherein the calculating of the Z-scale error includes performing a regression, or
wherein the scaling error is calculated based on (i) a difference between height measurements, (ii) a difference between control heights, and (iii) a height of a gauge block that is present on the surface during at least one of the height measurements.

7. The method of Claim 5 or Claim 6, wherein the height measurement mechanism includes a laser scanner.

8. The method of Claim 5, wherein the surface is a print platform of a 3D printing apparatus or a reference platform of the 3D printing apparatus,

wherein the scaling error is a Z-scale error of the 3D printing apparatus, and
wherein the method optionally further comprises controlling printing of a 3D object by correcting Z-coordinates based on the calculated Z-scale error.

9. An apparatus comprising:

at least one processor; and
at least one memory,

wherein the at least one memory stores computer-readable instructions which, when executed by the at least one processor, cause the processor to:

control a height adjustment mechanism to adjust a height of a surface of the apparatus, to a first control height;
control a measurement mechanism to measure first positions of a plurality of features positioned at different locations on the surface;
control the height adjustment mechanism to adjust the height of the surface, to a second control height;
control the measurement mechanism to measure second positions of the plurality of features; and
calculate an alignment error based on (i) differences between the first positions and the second positions and (ii) a difference between the first control height and the second control height.

10. The apparatus of Claim 9, wherein the apparatus is a 3D printing apparatus, and wherein the surface is a surface of a reference platform of the 3D printing apparatus.

11. The apparatus of Claim 10, wherein the measurement mechanism is a laser scanner,

wherein the detected first and second positions are X-Y positions,
wherein the calculated alignment error corresponds to a deviation of the laser scanner relative to the X-Y plane, and
wherein optionally the 3D printing apparatus compensates for measurements collected from the measurement mechanism based on the calculated alignment error.

12. A method comprising:

controlling a height adjustment mechanism to adjust a height of a surface of the apparatus, to a first control height;
controlling a measurement mechanism to measure first positions of a plurality of features positioned at different locations on the surface;
controlling the height adjustment mechanism to adjust the height of the surface, to a second control height;
controlling the measurement mechanism to measure second positions of the plurality of features; and
calculating an alignment error based on (i) differences between the first positions and the second positions and (ii) a difference between the first control height and the second control height.

13. The method of Claim 12, wherein the surface is a surface of a reference platform of a 3D printing apparatus.

14. The method of Claim 12 or Claim 13, wherein the measurement mechanism is a laser scanner,

wherein the detected first and second positions are X-Y positions, and
wherein the calculated alignment error corresponds to a deviation of the laser scanner relative to the X-Y plane.

15. The method of Claim 14, further comprising compensating for measurements collected from the measurement mechanism based on the calculated alignment error.

**FIG. 1A**

FIG. 1B

**FIG. 2**

**FIG. 3**

S400

| S410 | Set build platen height to $Z_{1(set)}$ |
|---|---|

| S420 | Measure height $Z_{1(measured)}$ |
|---|---|

| S430 | Raise build platen height to $Z_{2(set)}$ |
|---|---|

| S440 | Measure height $Z_{2(measured)}$ |
|---|---|

| S450 | Calculate Z-scale error based on $Z_{1(set)}$, $Z_{2(set)}$, $Z_{1(measured)}$, $Z_{2(measured)}$ |
|---|---|

END

**FIG. 4**

S500

S510 — Set $i = 1$;
Set build platen height to $Z_{1(set)}$

S520 — Measure height $Z_{1(measured)}$

S530 — Increment $i$ by 1;
Raise build platen height to $Z_{i(set)}$

S540 — Measure height $Z_{i(measured)}$

S550 — $i = n$ (total number of height measurements)?

NO

YES

S560 — Calculate Z-scale error
based on $Z_{1(set)} \rightarrow Z_{n(set)}$ and
$Z_{1(measured)} \rightarrow Z_{n(measured)}$

END

*FIG. 5*

Laser
Sensor

Initial
position

Gauge
Block

Z1

Z2

Printbed

**FIG. 6**

S700

S710 — Set build platen height to $Z_{1(set)}$

↓

S720 — Measure height $Z_{1(measured)}$

↓

S730 — Lower build platen height to $Z_{2(set)}$

↓

S740 — Place gauge block on build platen

↓

S750 — Measure height $Z_{2(measured)}$

↓

S760 — Calculate Z-scale error based on $Z_{1(set)}$, $Z_{2(set)}$, $Z_{1(measured)}$, $Z_{2(measured)}$

↓

**END**

*FIG. 7A*

S700'

S710' — Set $i = 1$;
Set build platen height to $Z_{1(set)}$

S720' — Measure height $Z_{1(measured)}$

S730' — Increment $i$ by 1;
Lower build platen height to $Z_{i(set)}$

S740' — Remove any existing gauge block and
place [$i$-1]-th gauge block on build platen

S750' — Measure height $Z_{i(measured)}$

S760' — $i = n$ (total number of height
measurements)?

NO

YES

S770' — Calculate Z-scale error
based on $Z_{1(set)} \rightarrow Z_{n(set)}$ and
$Z_{1(measured)} \rightarrow Z_{n(measured)}$

END

**FIG. 7B**

S800

S810 — Set $i = 1$;
Set build platen height to first height within measurement range

S820 — Perform operation S400 or S500

S830 — Increment $i$ by 1;
Lower build platen to height suitable for next set of measurements

S840 — Remove any existing gauge block and place [$i$-1]-th gauge block on build platen

S850 — Perform operation S400 or S500

S860 — $i = n$ (total number of height measurements)?

NO

YES

S870 — Calculate Z-scale error(s) based on sets of height measurements and height changes therebetween

END

**FIG. 8**

**FIG. 9**

970 (930)

970 (930)

960

940

950

**FIG. 10**

S1100

S1110 — | Remove build platen, install reference bed |

S1120 — | Set reference bed height to $Z_{1(set)}$ |

S1130 — | Move X-Y position of laser scanner to flat surface on reference bed |

S1140 — | Measure height $Z_{1(measured)}$ |

S1150 — | Raise reference bed height to $Z_{2(set)}$ |

S1160 — | Measure height $Z_{2(measured)}$ |

S1170 — | Calculate Z-scale error based on $Z_{1(set)}$, $Z_{2(set)}$, $Z_{1(measured)}$, $Z_{2(measured)}$ |

END

## FIG. 11

S1200

S1210 — Remove build platen,
install reference bed

S1220 — Set reference bed height to $Z_{1(set)}$

S1230 — Move X-Y position of laser scanner to
flat area on top surface of reference bed

S1240 — Measure height $Z_{1(measured)}$

S1250 — Move X-Y position of laser scanner to
groove lower landing

S1260 — Raise reference bed height by height
difference between groove lower landing
and top surface

S1270 — Measure height $Z_{2(measured)}$

S1280 — Calculate Z-scale error
based on $Z_{1(measured)}$, $Z_{2(measured)}$,
height difference between top surface and
lower landing

END

**FIG. 12**

S1300

S1310 — Remove build platen, install reference bed

S1320 — Set reference bed height to $Z_{1(set)}$

S1330 — Move X-Y position of laser scanner to flat area on top surface of reference bed

S1340 — Measure height $Z_{1(measured)}$

S1350 — Move X-Y position of laser scanner to integrated gauge block

S1360 — Lower reference bed height by height of gauge block

S1370 — Measure height $Z_{2(measured)}$

S1380 — Calculate Z-scale error based on $Z_{1(measured)}$, $Z_{2(measured)}$, height of gauge block

END

FIG. 13

S1400

S1410 — Receive set of X-Y-Z coordinates

S1420 — Apply Z-scale calibration correction to Z-coordinate and store corrected coordinate

**END**

*FIG. 14*

**FIG. 15**

S1600

S1610
Warm up apparatus to threshold
temperature range

S1620
Perform measurement scans
of reference bed

S1630
Determine locations of centers of each
reference bed groove

S1640
Compute regression to represent each
reference bed groove

S1650
Determine intersections between X and Y
reference bed grooves

END

**FIG. 16**

S1700

```
                    ┌─────────────────────────────┐
          S1700 ────│  Distinguish left slope and right│
                    │      slope of groove            │
                    └─────────────────────────────┘
                                  │
                                  ▼
                    ┌─────────────────────────────┐
                    │  Compute regressions of left and│
          S1710 ────│   right slopes based on depth   │
                    │       measurements              │
                    └─────────────────────────────┘
                                  │
                                  ▼
                    ┌─────────────────────────────┐
          S1720 ────│     Determine groove center     │
                    └─────────────────────────────┘
                                  │
                                  ▼
                                END
```

# FIG. 17

**FIG. 18**

S1900

| | |
|---|---|
| S1910 | Remove build platen, install reference bed |

↓

| | |
|---|---|
| S1920 | Set reference bed height to $Z_{1(set)}$ |

↓

| | |
|---|---|
| S1930 | Detect centers of intersections of reference bed grooves |

↓

| | |
|---|---|
| S1940 | Change reference bed height to $Z_{2(set)}$ |

↓

| | |
|---|---|
| S1950 | Detect centers of intersections of reference bed grooves |

↓

| | |
|---|---|
| S1960 | Compare two sets of intersection points, determine misalignment based on such comparison |

↓

**END**

## FIG. 19

S2000

S2010 — Receive set of X-Y-Z coordinates

S2020 — Apply correction to X-Y-Z coordinates and store corrected coordinates

END

**FIG. 20**

Europäisches
Patentamt

European
Patent Office

Office européen
des brevets

# EUROPEAN SEARCH REPORT

**Application Number**

EP 22 15 2114

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/197138 A1 (TRUMPF LASER & SYSTEMTECHNIK GMBH [DE]) 17 October 2019 (2019-10-17) * page 11, line 25 – page 13, line 9 * * page 14, lines 4-23 * * page 15, lines 16-30 * * page 36, line 22 – page 37, line 16 * * claims 1,8,14,22,23 * * figures 1,2,5 * | 1-15 | INV. B22F10/31 B22F10/85 B29C64/393 B33Y50/02 G01B11/06 G01B21/04 |
| X | WO 2018/182751 A1 (HEWLETT PACKARD DEVELOPMENT CO [US]; UNIV OREGON STATE [US]) 4 October 2018 (2018-10-04) * paragraphs [0043] – [0046] * * claims 1,4,5,9 * * figures 1,2,7 * | 1,2,4-6, 8-10,12 | |
| A | WO 2019/078813 A1 (HEWLETT PACKARD DEVELOPMENT CO [US]; UNIV OREGON STATE [US]) 25 April 2019 (2019-04-25) * paragraphs [0050] – [0059] * * figures 1A-F * | 1-15 | TECHNICAL FIELDS SEARCHED (IPC) B22F B29C B33Y C22C G01B |

The present search report has been drawn up for all claims

| Place of search | Date of completion of the search | Examiner |
|---|---|---|
| The Hague | 9 June 2022 | Knoflacher, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 2114

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2022

| Patent document cited in search report | | Publication date | Patent family member(s) | | Publication date |
|---|---|---|---|---|---|
| WO 2019197138 | A1 | 17-10-2019 | CN | 112236255 A | 15-01-2021 |
| | | | DE | 102018205403 A1 | 17-10-2019 |
| | | | EP | 3774125 A1 | 17-02-2021 |
| | | | US | 2021023622 A1 | 28-01-2021 |
| | | | WO | 2019197138 A1 | 17-10-2019 |
| WO 2018182751 | A1 | 04-10-2018 | CN | 110612427 A | 24-12-2019 |
| | | | EP | 3568665 A1 | 20-11-2019 |
| | | | US | 2020232785 A1 | 23-07-2020 |
| | | | WO | 2018182751 A1 | 04-10-2018 |
| WO 2019078813 | A1 | 25-04-2019 | CN | 111107973 A | 05-05-2020 |
| | | | EP | 3697592 A1 | 26-08-2020 |
| | | | US | 2020238625 A1 | 30-07-2020 |
| | | | WO | 2019078813 A1 | 25-04-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190009472
- US 20200361155
- US 10076876 B
- US 9149988 B
- US 9579851 B
- US 9694544 B
- US 9370896 B
- US 9539762 B
- US 9186846 B
- US 10000011 B
- US 10464131 B
- US 9186848 B
- US 9688028 B
- US 9815268 B
- US 10814558 B
- US 20160107379
- US 20180154439
- US 20180154580
- US 20180154437
- US 20200371509
- US 45996517